(19) Europäisches Patentamt
European Patent Office
Office européen des brevets

(11) **EP 3 218 133 B1**

(12) **EUROPEAN PATENT SPECIFICATION**

(45) Date of publication and mention
of the grant of the patent:
**14.04.2021 Bulletin 2021/15**

(51) Int Cl.:
***B23K 9/095*** *(2006.01)* ***B23K 31/12*** *(2006.01)*

(21) Application number: **15801223.7**

(86) International application number:
**PCT/IB2015/001991**

(22) Date of filing: **27.10.2015**

(87) International publication number:
**WO 2016/075518 (19.05.2016 Gazette 2016/20)**

(54) **SYSTEM AND METHOD FOR MONITORING WELD QUALITY**

VERFAHREN UND VORRICHTUNG ZUR SCHWEISSQUALITÄTSÜBERWACHUNG

SYTÈME ET PROCÉDÉ DE SURVEILLANCE DE LA QUALITÉ DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2014 US 201414536813**

(43) Date of publication of application:
**20.09.2017 Bulletin 2017/38**

(73) Proprietor: **Lincoln Global, Inc.
Santa Fe Springs, CA 90670 (US)**

(72) Inventor: **DANIEL, Joseph, A.
Sagamore Hills, OH 44067 (US)**

(74) Representative: **Grosse Schumacher Knauer von
Hirschhausen
Patent- und Rechtsanwälte
Frühlingstrasse 43A
45133 Essen (DE)**

(56) References cited:
**WO-A1-2011/058433**

**Description**

The invention is related to a method of determining a quality of a weld according to claim 1 and to a system for determining a quality of a weld according to claim 9. The preamble of claims 1 and 9 is based on WO2011058433. The general inventive concepts relate to electric arc welding and, more particularly, to systems, methods, and apparatuses for monitoring variables during a welding process and weighting the variables accordingly, quantifying weld quality, obtaining and using data indicative of a good weld, improving production and quality control for an automated welding process, teaching proper welding techniques, identifying cost savings for a welding process, and deriving optimal welding settings to be used as pre-sets for different welding processes or applications.

**TECHNICAL BACKGROUND**

Many different conditions and parameters contribute to the overall quality of a resulting weld. Consequently, manufacturers of electric arc welders have attempted to monitor operation of the welder to determine the quality of the weld and the efficiency of the welder during operation in a manufacturing facility. One attempt to monitor an electric arc welder is illustrated in U.S. Pat. No. 6,051,805 to Vaidya (hereinafter "Vaidya") where a computer or other programmed instrument is employed to monitor average current and the efficiency of the welding operation, which efficiency is expressed as a ratio of the time welding is performed to the total time of the work shift. In accordance with standard technology, this disclosed monitoring system includes a first control circuit which is in the form of a central processing unit with standard accessories such as RAM and EPROM. A second control circuit is connected to the first circuit to input and output information during the monitoring procedure. The monitor gathers information over a period of time which is disclosed as extending over a few hours or up to 999 hours. The monitor determines welding efficiency and monitors time to determine average current and accumulated arc welding time for overall efficiency.

Vaidya discloses a capability of monitoring the current and wire feed speed, as well as gas flow during the welding procedure. All of this information is stored in appropriate memory devices for subsequent retrieval of the operating characteristics of the welder during the welding process. In this way, the productivity of the welder can be measured to calculate cost efficiency and other parameters. Monitoring of the electric arc welder, as suggested in Vaidya, has been attempted by other manufacturers to measure average current during a welding process. However, measuring average current, voltage, wire feed speed or other parameters during a welding process and using this data for recording the performance of the welding operation has not been satisfactory. In the past, monitoring devices have had no pre-knowledge of the parameters being monitored.

Consequently, monitoring of parameters such as current, voltage and even wire feed speed in the past, even using the technology set forth in Vaidya, has been chaotic in response and incapable of determining the actual stability of the electric arc or whether the welding process is above or below desired parameter values. This information must be known for the purpose of rejecting a welding cycle and/or determining the quality of the weld performed during the welding cycle with desired accuracy. In summary, monitoring the operation of an electric arc welder when used for a variety of welding processes has not been satisfactory because there is no prior knowledge which can be used for the purposes of evaluating the welding process during its implementation.

Overcoming these drawbacks, U.S. Pat. No. 6,441,342 to Hsu (hereinafter "Hsu") discloses a monitor and method of monitoring an electric arc welder as the welder performs a selected arc welding process that creates information on the operation of the welder. Accordingly, use of standard, high power computer technology can be used on equally precise and intelligent data generated by the monitor. The monitor and monitoring system of Hsu employs known information during the welding process. The information is fixed and not varying. The monitor concentrates on specific aspects of the welding process to employ prior knowledge which is compared to actual performance. Thus, the stability and acceptable magnitudes or levels of a selected parameter is determined during a specific aspect of the welding process. The weld process is separated into fixed time segments with known desired parameters before monitoring. Then this data can be processed by known computer techniques to evaluate aspects of the weld cycles.

Hsu discloses that the welding process is carried out by an electric arc welder generating a series of rapidly repeating wave shapes. Each wave shape constitutes a weld cycle with a cycle time. Each weld cycle (i.e., wave shape) is created by a known wave shape generator used to control the operation of the welder. These wave shapes are divided into states, such as in a pulse welding process, a state of background current, ramp up, peak current, ramp down, and then back to background current. By dividing the known driving wave shape into states defined as time segments of the generated arc characteristics, any selected one of the states can be monitored. Indeed, many states can be multiplexed. For instance, in the pulse welding process the state related to the peak current can be monitored. Hsu discloses that the state of the welding process is monitored by being read at a high rate preferably exceeding 1.0 kHz. Each of the actual welding parameters, such as current, voltage or even wire feed speed is detected many times during each peak current state of the wave shape used in the pulse welding process. In this manner, the ramp up, ramp down, and background current are ignored during the monitoring process of the peak current state.

Consequently, the peak current is compared with a known peak current. A function of the peak current can be used to detect variations in the actual peak current output from the electric arc welder. In Hsu, a minimum level and a maximum level on the lower and higher side of the command peak current are used to determine the level of the peak current many times during each peak current state of the pulse weld wave shape. Whenever the current exceeds the maximum, or is less than the minimum, this event is counted during each wave shape. The total deviations or events are counted for a weld time (i.e., a time during which a welding process or some significant portion thereof is carried out). If this count is beyond a set number per wave shape or during the weld time, a warning may be given that this particular welding process experienced unwanted weld conditions. Indeed, if the count exceeds a maximum level the weld is rejected. This same capability is used with a statistical standard deviation program to read the peak current many times during each peak current state of the wave shape to sense the magnitude of the standard deviation. In practice, the standard deviation is the root-mean-square (RMS) deviation calculation by the computer program. In Hsu, the average peak current is calculated and recorded as well as the level conditions and the stability characteristics. The RMS of the current or voltage is also determined for each of the states being monitored, for example, the peak current state of a pulse wave shape. While the peak current level or standard elevation is monitored, the background current stage can be monitored by current level and duration.

Hsu discloses selecting a state in the wave shape and comparing the desired and known command signals for that state to the actual parameters of the welding process during that monitored state. The selection is based on prior knowledge of the waveform generator. For example, at a specific wire feed speed WFS1, the waveform generator is programmed to adjust peak current to control arc length. The "informed" monitor then selects the peak current segment as the monitored state, when welding at this wire feed speed WFS1. At another wire feed speed WFS2, however, the waveform generator is programmed to adjust background time to control arc length (and not peak current). The "informed" monitor then selects the background time as the monitored state and parameter, when welding at this wire feed speed WFS2. In contrast, a posteriori monitor has no idea that at different wire feed speeds, different aspects of the waveform should be monitored to detect arc stability. Monitoring background time at wire feed speed WFS1 or monitoring peak current at wire feed speed WFS2, in this example, would be very ineffective. Thus, Hsu discloses using a time segment of the wave shape for monitoring this segment of the wave shape using prior knowledge of the desired values. This allows actual monitoring of the electric arc welding process and not merely an averaging over the total wave shape.

In Hsu, the monitor is characterized by the use of prior knowledge, as opposed to the normal process of merely reading the output parameters experienced during the welding process. Consequently, the monitoring greatly simplifies the task of detecting normal behavior of a welder when the normal behavior is a function of time and differs during only one aspect of the welding process. The teachings of Hsu are not as applicable to monitoring voltage in a constant voltage process, because the desired level of voltage is a known characteristic during the total weld cycle. However, in other welding processes when both the voltage and current vary during different segments of the wave shape, the method of Hsu gives accurate readings of stability, RMS, standard deviation, average, below minimum and above maximum before the actual parameter being monitored during selected segments of the wave shape.

According to Hsu, the time varying welding processes, such as pulse welding and short circuit welding, are monitored with precise accuracy and not by reading general output information. The monitor is activated at a selected time in each wave form which is the selected state or segment of the wave shape. The monitor compares actual parameters to the desired parameters in the form of command signals directed to a power supply of the welder. In Hsu, monitoring can occur during only specific segments of the wave shape; however, in exceptional events, such as when the arc is extinguished or when there is a short circuit, a computerized subroutine is implemented by either voltage sensing or current sensing to restart the arc and/or correct the short. The subroutines for these events run parallel to the monitoring program. Consequently, these exceptions do not affect the overall operation of the monitor. These subroutines are constructed as exceptional states or time segments. The parameters or signals within these exceptional states are monitored in a similar fashion as described above.

In Hsu, production information over a calendar time, shift or even by operator can be accumulated for the purposes of evaluating the operation or efficiency of a welder. The monitoring of each weld cycle by monitoring a specific segment or state of the wave shape allows accumulation of undesired events experienced over time. This also allows a trend analysis so that the operator can take corrective actions before the welding process actually produces defective production welds. Trend analysis, defect analysis, accumulated defects, logging of all of these items and related real time monitoring of the electric arc welder allows direct intervention in a timely manner to take preventive actions as opposed to corrective actions.

A method of monitoring an electric arc welder as the welder may perform a selected arc welding process by creating actual welding parameters between an advancing wire and a workpiece, the selected process controlled by command signals to a power supply of the welder, according to one exemplary embodiment, is disclosed. The method includes (a) generating a series of rapidly repeating wave shapes, each wave shape constituting a weld cycle with a cycle time; (b) dividing the wave shapes into states; (c) measuring a selected weld parameter occurring in one of the wave shape states at an interrogation rate over a period of time to obtain a data set for the selected weld parameter;

(d) for each period of time, calculating a stability value for the selected weld parameter from the data set; (e) comparing each stability value to an expected stability value to determine if a difference between the stability value and the expected stability value exceeds a predetermined threshold; and (f) if the difference exceeds the threshold, weighting the stability value with a magnitude weight based on the difference, and weighting the stability value with a time contribution weight based on a time contribution of the wave shape state to its wave shape. In this manner, the method can assign multiple weights (e.g., based on a degree/magnitude of deviation and a time contribution of its state) to a measured parameter (i.e., an item in the data set) that constitutes an outlier. In one exemplary embodiment, an outlier is defined as a measured value for a weld parameter that falls outside the limit of three (3) standard deviations away from the mean value of the weld parameter. A monitor, integrated with an arc welder, for performing this exemplary method is also contemplated.

A method of quantifying a weld's quality by monitoring an electric arc welder as the welder may perform a selected arc welding process by creating actual welding parameters between an advancing wire and a workpiece, the selected process controlled by command signals to a power supply of the welder, according to one exemplary embodiment, is disclosed. The method may include: (a) generating a series of rapidly repeating wave shapes, each wave shape constituting a weld cycle with a cycle time; (b) dividing the wave shapes into states; (c) measuring a plurality of selected weld parameters occurring in one or more of the states at an interrogation rate over a period of time repeatedly during a weld time; and (d) calculating a plurality of quality parameters for each of the states based on the measurements of the selected weld parameters during the periods of time, wherein the quality parameters represent an overall quality measurement of the weld. A monitor, integrated with an arc welder, for performing this exemplary method is also contemplated.

In one exemplary embodiment of the background art, the method also may include: (e) comparing a value of each of the quality parameters calculated for each period of time to a corresponding expected quality parameter value to determine if a difference between the calculated quality parameter value and the expected quality parameter value exceeds a predetermined threshold; and (f) if the difference exceeds the threshold, weighting the calculated quality parameter value with a magnitude weight based on the difference, and weighting the calculated quality parameter value with a time contribution weight based on a time contribution of its state to the wave shape including the state. A monitor, integrated with an arc welder, for performing this exemplary method is also contemplated.

In one exemplary embodiment of the background art, the interrogation rate may be 120 kHz. In one exemplary embodiment, the period of time is approximately 250 ms.

In one exemplary embodiment of the background art, the selected weld parameters may include, for each of the states, a count of the measurements taken for each of the selected weld parameters in the period of time, a mean voltage voltage in the period of time, a root mean square voltage RMSV in the period of time, a voltage variance $V_{var}$ in the period of time, a mean current current in the period of time, a root mean square current RMSI in the period of time, and a current variance $I_{var}$ in the period of time, wherein voltage=a sum of voltages measured in the period of time/the count of voltage measurements, wherein

$$RMSV = \sqrt{\frac{\sum_{i=1}^{N}(voltage_i)^2}{N}}$$

wherein $V_{var}$=RMSV-voltage, wherein current=a sum of currents measured in the period of time/the count of current measurements, wherein

$$RMSI = \sqrt{\frac{\sum_{i=1}^{N}(current_i)^2}{N}}$$

and wherein $I_{var}$=RMSI-current.

In one exemplary embodiment of the background art, the quality parameters may include a quality count average QCA for each state calculated as:

$$QCA = \frac{\sum_{i=1}^{N} count_i}{N}$$

wherein N is the total number of weld cycles in a period of time, and wherein count.sub.i refers to a count of the measurements for a specific one of the weld cycles in the period of time.

In one exemplary embodiment of the background art, the quality parameters may include a quality count standard deviation QCSD for each state calculated as:

$$QCSD = \frac{\sum_{i=1}^{N}(count_i - QCA)^2}{N-1}$$

In one exemplary embodiment of the background art, the quality parameters may include a quality count standard deviation QCSD for each state calculated as:

$$QCSD = \frac{\sum_{i=1}^{N}(count_i - QCA)^2}{N}$$

In one exemplary embodiment of the background art, the quality parameters may include a quality voltage average QVA for each state calculated as:

$$QVA = \frac{\sum_{i=1}^{N} voltage_i}{N}$$

wherein N is the total number of weld cycles in the period of time, and wherein voltage, refers to a voltage measurement for a specific one of the weld cycles in the period of time.

In one exemplary embodiment of the background art, the quality parameters may include a quality voltage standard deviation QVSD for each state calculated as:

$$QVSD = \frac{\sum_{i=1}^{N}(voltage_i - QVA)^2}{N-1}$$

In one exemplary embodiment of the background art, the quality parameters may include a quality voltage standard deviation QVSD for each state calculated as:

$$QVSD = \frac{\sum_{i=1}^{N}(voltage_i - QVA)^2}{N}$$

In one exemplary embodiment of the background art, the quality parameters may include a quality current average QIA for each state calculated as:

$$QIA = \frac{\sum_{i=1}^{N} current_i}{N}$$

wherein N is the total number of weld cycles in the period of time, and wherein current_i refers to a current measurement for a specific one of the weld cycles in the period of time.

In one exemplary embodiment of the background art, the quality parameters may include a quality current standard deviation QISD for each state calculated as:

$$QISD = \frac{\sum_{i=1}^{N}(current_i - QIA)^2}{N-1}$$

In one exemplary embodiment of the background art, the quality parameters may include a quality current standard deviation QISD for each state calculated as:

$$QISD = \frac{\sum_{i=1}^{N}(current_i - QIA)^2}{N}$$

In one exemplary embodiment of the background art, the quality parameters may include a quality voltage variance average QVVA for each state calculated as:

$$QVVA = \frac{\sum_{i=1}^{N} Vvar_i}{N}$$

wherein N is the total number of weld cycles in the period of time.

In one exemplary embodiment of the background art, the quality parameters may include a quality voltage variance standard deviation QVVSD for each state calculated as:

$$QVVSD = \frac{\sum_{i=1}^{N}(Vvar_i - QVVA)^2}{N-1}$$

In one exemplary embodiment of the background art, the quality parameters may include a quality voltage variance standard deviation QVVSD for each state calculated as:

$$QVVSD = \frac{\sum_{i=1}^{N}(Vvar_i - QVVA)^2}{N}$$

In one exemplary embodiment of the background art, the quality parameters may include a quality current variance average QIVA for each state calculated as:

$$QIVA = \frac{\sum_{i=1}^{N} Vvar_i}{N}$$

wherein N is the total number of weld cycles in the period of time.

In one exemplary embodiment of the background art, the quality parameters may include a quality current variance standard deviation QIVSD for each state calculated as:

$$QIVSD = \frac{\sum_{i=1}^{N}(Ivar_i - QIVA)^2}{N-1}$$

In one exemplary embodiment of the background art, the quality parameters may include a quality current variance standard deviation QIVSD for each state calculated as:

$$QIVSD = \frac{\sum_{i=1}^{N}(Ivar_i - QIVA)^2}{N}$$

Similar quality parameters based on monitored wire feed speed (WFS) may also be calculated in a similar manner such as, for example, a quality wire feed speed average (QWA), a quality wire feed speed standard deviation (QWSD), a quality wire feed speed variance average (QWVA), and a quality wire feed speed variance standard deviation (QWVSD).

In one exemplary embodiment of the background art, the method further may include: (e) using the quality parameters in a metric to evaluate subsequent welds. A monitor, integrated with an arc welder, for performing this exemplary method is also contemplated.

A method of evaluating a plurality of welds performed under substantially the same conditions and according to substantially the same arc welding process by monitoring an electric arc welder as the welder may perform the welds according to the arc welding process by creating actual welding parameters between an advancing wire and a workpiece, the selected process controlled by command signals to a power supply of the welder, according to one exemplary embodiment, is disclosed. The method includes, during each weld: (a) generating a series of rapidly repeating wave shapes, each wave shape constituting a weld cycle with a cycle time; (b) dividing the wave shapes into states; (c) measuring a selected weld parameter occurring in one of the states at an interrogation rate over a period of time to obtain a data set for the selected weld parameter; (d) for each period of time, calculating a quality value for the selected weld parameter from the data set; (e) comparing each quality value to an expected quality value to determine if a difference between the quality value and the expected quality value exceeds a predetermined threshold; (f) if the difference exceeds the threshold, weighting the quality value with a magnitude weight based on the difference, and weighting the quality value with a time contribution weight based on a time contribution of the state to its wave shape; and (g) using all of the quality values, including any weighted quality values, obtained during the weld time to determine a quality score for the weld.

In one exemplary embodiment of the background art, the method further may include: (h) rejecting the weld if its quality score is within a first predefined range of quality scores; and (i) accepting the weld if its quality score is within a second predefined range of quality scores.

In one exemplary embodiment of the background art, the method further may include: (h) permanently associating each weld with its corresponding quality score.

In one exemplary embodiment of the background art, the interrogation rate may be 120 kHz. In one exemplary embodiment of the background art, the period of time may be approximately 250 ms.

In one exemplary embodiment of the background art, the selected weld parameter may be arc current. In one exemplary embodiment of the background art, the selected weld parameter may be arc voltage.

A method of providing instruction to an individual (i.e., an operator) manually performing an arc welding process using an electric arc welder including an integrated monitor, the welder may perform the arc welding process by creating actual welding parameters between an advancing wire and a workpiece, the monitor capable of monitoring the actual welding parameters, and the arc welding process controlled by command signals to a power supply of the welder, according to one exemplary embodiment, is disclosed. The method includes: (a) generating a series of rapidly repeating wave shapes, each wave shape constituting a weld cycle with a cycle time; (b) dividing the wave shapes into states; (c) measuring a selected weld parameter occurring in one of the states at an interrogation rate over a period of time to obtain a data set for the selected weld parameter; (d) for each period of time, calculating a quality value for the selected weld parameter from the data set; (e) comparing each quality value to an expected quality value to determine if a difference between the quality value and the expected quality value exceeds a predetermined threshold; (f) if the difference exceeds the threshold, weighting the quality value with a magnitude weight based on the difference, and weighting the quality value with a time contribution weight based on a time contribution of the state to its wave shape; (g) using the quality value, including any weights, to update a current aggregate quality score for the weld; (h) determining if the current aggregate quality score is within a predefined range of acceptable quality scores during the welding process; and (i) if the current aggregate quality score is outside the predefined range of acceptable quality scores, providing information on corrective action to the operator.

In one exemplary embodiment of the background art, the interrogation rate may be 120 kHz. In one exemplary embodiment of the background art, the period of time may be approximately 250 ms.

In one exemplary embodiment of the background art, the information may be provided visually. In one exemplary embodiment of the background art, the information may be provided audibly.

In one exemplary embodiment of the background art, the information may include a suggested change in a position of the wire relative to the workpiece. In one exemplary embodiment of the background art, the information may include a suggested change in a rate of movement of the wire relative to the workpiece.

In one exemplary embodiment of the background art, the information may be provided to the operator at a predetermined reporting rate. In one exemplary embodiment of the background art, the reporting rate may be less than 30 seconds. In one exemplary embodiment, the reporting rate is greater than or equal to 30 seconds.

In one exemplary embodiment of the background art, the information may be provided if recent changes in the current aggregate quality score indicate the current aggregate quality score is likely to move outside the predefined range of acceptable quality scores.

In one exemplary embodiment of the background art, the method further may include: (j) if the current aggregate quality score is within the predefined range of acceptable quality scores, providing confirmation to the operator that no corrective action is necessary.

A method of evaluating a plurality of operators may perform an arc welding process by monitoring an electric arc welder associated with each of the operators, as each welder is used by its respective operator to perform said arc welding process by creating actual welding parameters between an advancing wire and a workpiece with said arc welding process controlled by command signals to a power supply of said welder, is disclosed. The method may include, for each operator: (a) generating a numerical score indicating a quality measurement of a weld formed according to said arc welding process relative to a predetermined baseline weld; (b) measuring an amount of time said operator spends performing said arc welding process; and (c) associating said numerical score and said welding time with said operator.

In one exemplary embodiment of the background art, the numerical score may be generated by: (a1) generating a series of rapidly repeating wave shapes, each wave shape constituting a weld cycle with a cycle time; (a2) dividing said wave shapes into states; (a3) measuring a selected weld parameter occurring in one of said states at an interrogation rate over a period of time to obtain a data set for said selected weld parameter; (a4) for each period of time, calculating a quality value for said selected weld parameter from said data set; (a5) comparing each quality value to an expected quality value to determine if a difference between said quality value and said expected quality value exceeds a predetermined threshold; (a6) if said difference exceeds said threshold, weighting said quality value with a magnitude weight based on said difference, and weighting said quality value with a time contribution weight based on a time contribution of said state to its wave shape; and (a7) using all of said quality values, including any weighted quality values, obtained during said arc welding process to determine said numerical score.

A method of performing a cost-effective analysis for a selected arc welding process, wherein an electric arc welder may perform the arc welding process by creating actual welding parameters between an advancing wire and a workpiece, the selected process controlled by command signals to a power supply of the welder, according to one exemplary embodiment, is disclosed. The method includes: (a) identifying a plurality of weld conditions capable of affecting overall weld quality; (b) varying one of the weld conditions across a plurality of welds and fixing all remaining weld conditions across the welds; (c) for each of the welds: (i) generating a series of rapidly repeating wave shapes, each wave shape constituting a weld cycle with a cycle time; (ii) dividing the wave shapes into states; (iii) measuring a selected weld parameter occurring in one of the states at an interrogation rate over a period of time to obtain a data set for the selected weld parameter; (iv) for each period of time, calculating a stability value for the selected weld parameter from the data set; (v) comparing each stability value to an expected stability value to determine if a difference between the stability value and the expected stability value exceeds a predetermined threshold; (vi) if the difference exceeds the threshold, weighting the stability value with a magnitude weight based on the difference, and weighting the stability value with a time contribution weight based on a time contribution of the wave shape state to its wave shape; (vii) using the stability values obtained during the weld time, including any weighted stability values, to calculate an overall quality score for the weld; (viii) determining a cost for the weld; and (ix) associating the quality score and the cost with the weld.

In one exemplary embodiment of the background art, the weld conditions may include one or more of wire characteristics, workpiece characteristics, a shielding gas flow rate, a shielding gas composition, and a workpiece pre-heat temperature.

In one exemplary embodiment of the background art, the cost may include monetary expenditures related to producing the weld. In one exemplary embodiment of the background art, the cost may include a total time required to complete the weld.

In one exemplary embodiment of the background art, the stability value may be a standard statistical deviation for the selected weld parameter.

In one exemplary embodiment of the background art, the interrogation rate may be 120 kHz. In one exemplary embodiment, the period of time is approximately 250 ms.

In one exemplary embodiment of the background art, the method further may include: (d) outputting the quality score and the cost (or respective averages thereof) associated with each of the welds.

A method of using pre-set welding parameters to obtain a weld having a desired quality, the weld may be produced by an electric arc welder performing a selected arc welding process by creating actual welding parameters between an advancing wire and a workpiece, the welding process may be controlled by command signals to a power supply of the welder, according to one exemplary embodiment, is disclosed. The method includes: (a) presenting a plurality of sets of selected weld parameters to a user along with a quality score corresponding to each set, wherein the quality score quantifies an overall quality of a weld previously obtained using the set of selected weld parameters; (b) receiving input from the user as to which of the sets of selected weld parameters to use for performing the welding process; and (c) performing the welding process using the set of selected weld parameters corresponding to the input.

In one exemplary embodiment of the background art, a cost associated with performing the welding process using each of the sets of selected weld parameters may be presented to the user.

In one exemplary embodiment of the background art, the method further may include: (d) receiving input from the user identifying a minimum acceptable quality score; and (e) filtering out all sets of selected weld parameters that correspond to an associated quality score below the minimum acceptable quality score.

In one exemplary embodiment of the background art, the method further may include: (d) receiving input from the user identifying a range of acceptable quality scores; and (e) filtering out all sets of selected weld parameters that correspond to an associated quality score outside of the range of acceptable weld quality scores.

In one exemplary embodiment of the background art, a method of diagnosing an arc welding process by monitoring an electric are welder as the welder performs the arc welding process by creating actual welding parameters between an advancing wire and a workpiece to create a weld is disclosed. The welding process may be controlled by command signals to a power supply of the welder. The method may include generating a series of rapidly repeating wave shapes, each wave shape constituting a weld cycle with a cycle time, and dividing the wave shapes into states. The method further includes measuring a plurality of weld parameters occurring in one or more of the states at an interrogation rate over a period of time repeatedly during the welding process. The method also may include calculating a plurality of quality parameters for each of the one or more states based on the measurements of the weld parameters during the welding process. The method further includes analyzing at least one of the plurality of quality parameters and the plurality of weld parameters to diagnose the arc welding process by determining one or more possible causes of one or more localized or continuous defects of the weld.

The method may further include comparing a value of each of the quality parameters calculated for each period of time to a corresponding expected quality parameter value to determine if a difference between the calculated quality parameter value and the expected quality parameter value exceeds a predetermined threshold. If the difference exceeds the threshold, the method also includes weighting the calculated quality parameter value with a magnitude weight based on the difference, and weighting the calculated quality parameter with a time contribution weight based on a time contribution of its state to the wave shape including the state.

In one exemplary embodiment of the background art, a system for diagnosing an arc welding process by monitoring an electric are welder as the welder performs the arc welding process by creating actual welding parameters between an advancing wire and a workpiece to create a weld is disclosed. The welding process is defined by a series of rapidly repeating wave shapes controlled by command signals to a power supply of the welder. The system includes a logic state controller for segmenting the wave shapes into a series of time segmented states and a circuit for selecting a specific wave shape state. The system further includes monitoring devices for monitoring a plurality of weld parameters occurring in one or more of the states at an interrogation rate over a period of time repeated during the welding process to obtain a data set for the plurality of weld parameters. The system also includes a circuit for calculating a plurality of quality parameters for each of the states based on the monitored plurality of weld parameters. The system further includes a diagnostic logic circuit for analyzing at least one of the plurality of quality parameters and the plurality of weld parameters to diagnose the arc welding process by determining one or more possible causes of one more localized or continuous defects of the weld.

The system may further include a circuit for comparing a value of each of the quality parameters calculated for each period of time to a corresponding expected quality parameter value to determine if a difference between the calculated quality parameter value and the expected quality parameter value exceeds a predetermined threshold. The system may also include a circuit for weighting the calculated quality parameter value with a magnitude weight based on the difference, and weighting the calculated quality parameter value with a time contribution weight based on a time contribution of its state to the wave shape including the state, if the difference exceeds the threshold.

## DESCRIPTION

More technical background: In order to improve welding, especially to improve monitoring the operation of an electric arc welder when used for a variety of welding processes, a method of determining a quality of a weld according to claim 1 is described and a system for determining a quality of a weld according to claim 9. Preferred embodiments are subject of the subclaims. The general inventive concepts contemplate systems, methods, and apparatuses for monitoring variables during a welding process and weighting the variables accordingly, quantifying weld quality, obtaining and using data indicative of a good weld, detecting weld defects, and diagnosing possible causes of the weld defects. The weld quality data allows for improvements in production and quality control for an automated welding process, teaching proper welding techniques, identifying cost savings for a welding process, and deriving optimal welding settings to be used as pre-sets for different welding processes or applications. By way of example to illustrate various aspects of the general inventive concepts, several exemplary systems, methods, and are disclosed herein.

According to the invention, a method of determining a quality of a weld by monitoring a welder as the welder performs a welding process by creating actual welding parameters between an advancing wire and a workpiece is provided. The welding process is defined by a series of rapidly repeating wave shapes controlled by command signals to a power supply of the welder. The method includes segmenting a wave shape, having a weld cycle with a cycle time, into a series of time-segmented states. The method also includes selecting a non-adaptive state from the series of time-segmented states. The non-adaptive state represents a segment of the wave shape where the command signals remain invariable under different weld conditions. The method further include measuring a plurality of weld parameters generated between the advancing wire and the workpiece during the non-adaptive state at an interrogation rate over an interval of time. In addition, the method includes calculating a plurality of quality parameters for the non-adaptive state based on measurements of the plurality of weld parameters acquired during the interval of time within the non-adaptive state.

In one exemplary embodiment, a system for determining a quality of a weld by monitoring a welder as the welder performs a welding process by creating actual welding parameters between an advancing wire and a workpiece. The welding process being defined by a series of rapidly repeating wave shapes controlled by command signals to a power supply of the welder. The system includes a logic state controller for segmenting a wave shape, having a weld cycle with a cycle time, into a series of time-segmented states. The system further includes a selection circuit for selecting a non-adaptive state from the series of time-segmented states. The non-adaptive state represents a segment of the wave shape where the command signals remain invariable under different weld conditions. The system also includes a monitor circuit configured to measure a plurality of weld parameters generated between the advancing wire and the workpiece during the non-adaptive state at an interrogation rate over an interval of time. In addition, the system includes a circuit for calculating a plurality of quality parameters for the non-adaptive state based on measurements of the plurality of weld parameters acquired during the interval of time within the non-adaptive state.

Numerous aspects of the general inventive concepts will become readily apparent from the following detailed description of exemplary embodiments, from the claims and from the accompanying drawings.

## BRIEF DESCRIPTION OF THE DRAWINGS

The general inventive concepts as well as embodiments and advantages thereof are described below in greater detail, by way of example, with reference to the drawings in which:

FIG. 1 is a combined block diagram and computer flow chart or program illustrating a monitor of an arc welder, according to one background example.

FIG. 2 is a current command graph from a wave generator showing the command wave shape divided into time segments or states of both fixed and variable durations, according to one background example.

FIG. 3 is a current graph of the actual command signals for arc current with the actual arc current parameter superimposed in dashed lines, according to one background example.

FIG. 4 is a block diagram of an aspect of the invention for monitoring signals internal of the welder instead of weld parameters as illustrated in FIGS. 2 and 3, according to one background example.

FIG. 5 is a time based graph illustrating the wave shape, wire feeder command signal and actual wire feeder command signal as experienced in the background example shown in FIG. 4;

FIG. 6 is a portion of a parameter curve illustrating a level monitoring feature, according to one background example.

FIG. 7 is a block diagram and computer flow chart or program illustrating processing for stability during a selected state of the wave shape shown in FIGS. 2 and 3, according to one background example.

FIG. 8 is a block diagram and computer flow chart or program to process information from the level monitor stages of the background example shown in FIG. 1;

FIG. 9 is a flowchart illustrating a weighting method for weighting sampled weld data parameters, according to one background example.

FIG. 10 is a diagram of a conceptual production line, according to one Z background example.

FIG. 11 is a flow chart illustrating a method of instruction, according to one background example.

FIG. 12 is a block diagram illustrating a system for monitoring students, according to one background example.

FIG. 13 is a flow chart illustrating a method of monitoring students, according to one background example.

FIGS. 14A and 14B are tables showing exemplary data used in a cost analysis for a welding process, according to one background example.

FIG. 15 is a table showing pre-set data associating welding conditions, welders, and welding processes, according to one background example.

FIG. 16 illustrates a schematic block diagram of an example of a system for diagnosing an arc welding process;

FIG. 17 is a flowchart of a method of diagnosing an arc welding process using the system of FIG. 16 by monitoring an electric arc welder as the welder performs the arc welding process by creating actual welding parameters between an advancing wire and a workpiece to create a weld;

FIG. 18 illustrates a schematic block diagram of an embodiment of a system for adjusting welding process monitoring and evaluation in response to different or varying welding conditions;

FIG. 19 illustrates a schematic block diagram of an exemplary, non-limiting embodiment of a monitor from the system of FIG. 18 according to one or more aspects; and

FIG. 20 illustrates a flowchart of a method for determining a quality of a weld by monitoring a welder as the welder performs a welding process by creating actual welding parameters between an advancing wire and a workpiece.

## BACKGROUND

In the following technical background is described, that is useful for understanding the invention. While the general inventive concepts are susceptible of embodiment in many different forms, there are shown in the drawings and will be described herein in detail specific embodiments thereof with the understanding that the present disclosure is to be considered as merely an exemplification of the principles of the general inventive concepts. Accordingly, the general inventive concepts are not intended to be limited to the specific embodiments illustrated herein. Furthermore, the disclosures of U.S. Pat. Nos. 5,278,390 and 6,441,342 are incorporated herein by reference, in their entirety, as they may provide background that facilitates a better understanding of particular aspects and/or advancements of the general inventive concepts.

The following are definitions of exemplary terms used throughout the disclosure. Both singular and plural forms of all terms fall within each meaning:

"Logic," synonymous with "circuit" as used herein includes, but is not limited to, hardware, firmware, software and/or combinations of each to perform a function(s) or an action(s). For example, based on a desired application or needs, logic may include a software controlled microprocessor, discrete logic such as an application specific integrated circuit (ASIC), or other programmed logic device. In some instances, logic could also be fully embodied as software.

"Software" or "computer program" as used herein includes, but is not limited to, one or more computer readable and/or executable instructions that cause a computer or other electronic device to perform functions, actions, and/or behave in a desired manner. The instructions may be embodied in various forms such as routines, algorithms, modules or programs including separate applications or code from dynamically linked libraries. Software may also be implemented in various forms such as a stand-alone program, a function call, a servlet, an applet, instructions stored in a memory, part of an operating system or other type of executable instructions. It will be appreciated by one of ordinary skill in the art that the form of software is dependent on, for example, requirements of a desired application, the environment it runs on, and/or the desires of a designer/programmer or the like.

"Computer" or "processing unit" as used herein includes, but is not limited to, any programmed or programmable electronic device that can store, retrieve, and process data.

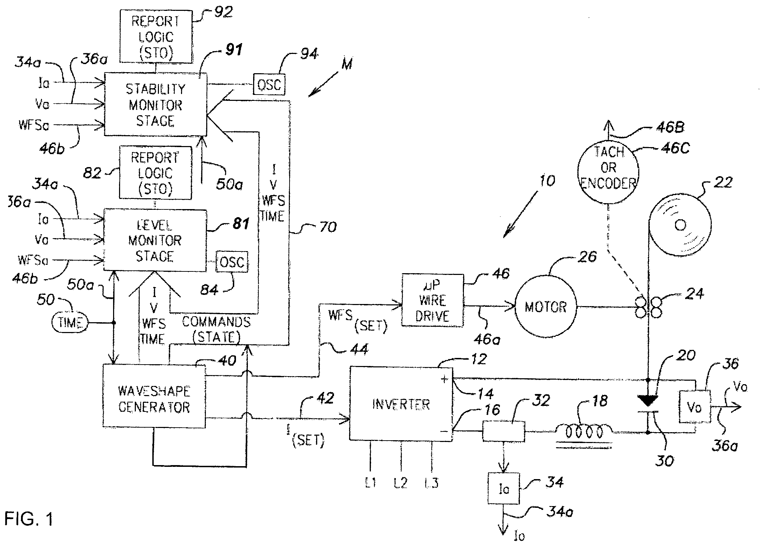

Referring now to the drawings which illustrate various exemplary embodiments of the general inventive concepts and applications employing the general inventive concepts, FIG. *1* shows a block diagram and flow chart or program implemented by a standard onboard computer in electric arc welder **10**. For example, welder **10** can be a Power Wave, inverter based electric arc welder sold by The Lincoln Electric Company of Cleveland, Ohio. In accordance with standard technology, welder **10** includes a three phase electrical input L1, L2, L3 directing electrical current to power supply **12.** An onboard computerized controller operates the inverter based power supply to create a positive potential at terminal **14** and a negative potential at terminal **16.**

Selected arc welding processes are performed by directing a selected previously determined wave shape to the actual welding circuit, shown to have a standard smoothing inductor **18.** Welder **10** performs the electric arc welding process between an advancing welding wire **20** from reel **22** driven at a desired rate by feeder **24** operated at the speed of motor **26.** Heat of the arc melts wire **20** and workpiece **30** to deposit molten metal from the wire onto the workpiece. To monitor the actual parameters of the welding process, shunt **32** (a monitoring device) provides output signal $I_a$ from block **34** on line **34a.** This signal is representative of the actual arc current at any given time. In a like manner, the voltage between wire **20** and workpiece **30** is sensed by block **36** (a monitoring device) so the output $V_a$ on line **36a** is the instantaneous arc voltage to constitute a second weld parameter. The weld parameters illustrated in FIG. 1 are the actual arc current $I_a$ and the actual arc voltage $V_a$.

Another parameter controlled for practicing the invention is wire feed speed (WFS), caused by rotation of the motor **26.** Consequently, three externally readable welding parameters of the welding process are arc current $I_a$ in line **34a,** arc voltage $V_a$ in line **36a** and the wire feed speed WFS readable in line **46b,** as explained later. The WFS in line **46b** is read by tachometer or encoder **46c** (a monitoring device) connected to the drive rolls **24** of the feeder gear box or, alternatively, on a passive wheel attached to the wire. In FIG. 1, the tachometer is shown as driven by the feed rolls. It could also be driven, for example, by the output shaft of motor **26.**

The Power Wave electric arc welder includes a wave shape generator to create a series of rapidly repeating wave shapes, each wave shape (e.g., a single sequence of a voltage/current waveform) constituting a weld cycle with a cycle time. These weld cycles are repeated during the welding process to define a weld time. One embodiment of the Power Wave welder **10** is shown in U.S. Pat. No. 5,278,390 to Blankenship wherein the welder controls the individual wave shape to be output by power supply **12** through command line **42** and the speed of motor **26** through command line **44**. Command line **44** has a signal which is recognized by the microprocessor on the wire drive control **46** of motor **26** to output the motor voltage drive PWM pulses in line **46a**. In practice, the information on line **44** is digital and the command signal on line **46a** is analog. Wave shape generator **40** creates digital signals in lines **42, 44** to controlling the desired welding process to be performed by welder **10**. The external parameters $I_a$, $V_a$ and WFS can be read by appropriate monitoring devices.

The wave shape generator **40** divides or segments each of the output wave shapes into a series of time segmented portions or states. In one exemplary embodiment, monitor M is a program loaded into the computer of welder **10,** among other things, to read parameters during one selected segment of the wave shape. The monitor M can be implemented using software, hardware, and combinations thereof, without departing from the spirit and the scope of the general inventive concepts. The portion of the wave shape being monitored is determined by the wave shape generator **40**. Indeed, monitor M monitors various time segments or states of the wave shape output by generator **40**. In practice, the wave shape generator **40** selects several of the time segments forming the wave shape and outputs the various states into a command interface **70**. Consequently, the command interface **70** causes measurement of the parameters during selected time segments of each wave shape output by the generator. Information or data on the command interface **70** includes the state or states being monitored and the particular value or level of the various parameters $I_a$, $V_a$, and/or WFS.

Interface **70** of monitor M contains the data recognizing the particular state being processed together with the values for the weld parameters being read. The data in interface **70** is analyzed by level stage **81** to determine the relationship of a parameter on a level basis. The actual parameters are compared with trained or measured parameters during selected states of the wave shape from generator **40**. During a particular segment or state of the wave shape, level monitor stage **81** reads the actual parameters in lines **34a, 36a** and **46b**. These instantaneous values of the actual parameters are stored in internal memory, identified as the report logic **82**. The reading of the actual parameters occurs rapidly as indicated by oscillator **84**. In one exemplary embodiment, reading of the actual parameters occurs at a rate of 120 kHz for pulse welding. The rate can be adjusted; however, the higher the rate the better the sensitivity of the level measurement. Level monitor 81 also determines a deviation of the actual welding parameters from either a minimum or maximum level. In this manner, not only can the actual values be stored, but data is stored representing deviation of the actual reading of the parameter for a given state as compared to a minimum level or to a maximum level. Report memory or logic **82** records deviation from a set level during a given state of the wave shape, as well as the actual level during the selected state of the wave shape. For a total weld cycle, these readings are accumulated, counted or otherwise processed to determine the quality of the weld and any trends toward weld defects.

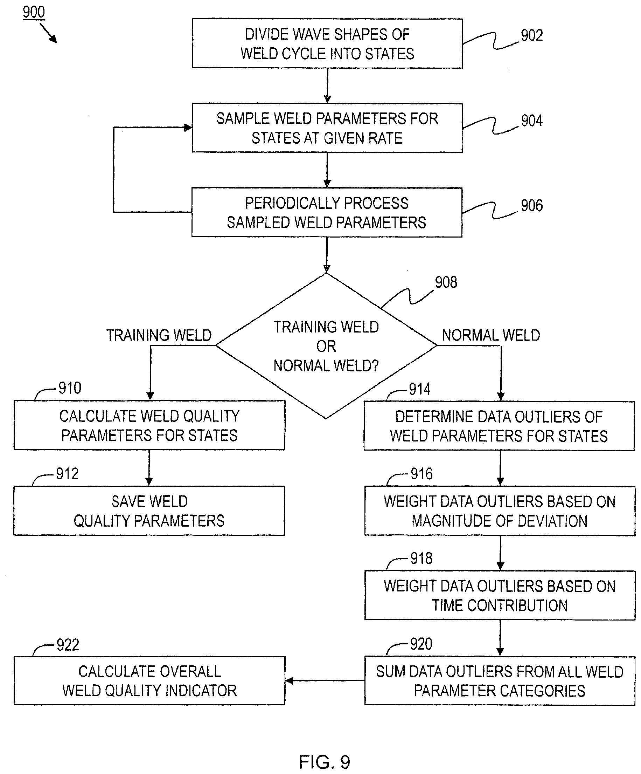

In one exemplary embodiment, the readings (e.g., periodically accumulated sets of the readings) are weighted based on a plurality of criteria. The readings can be accumulated, for example, every 250 ms. In one exemplary embodiment, a set is weighted based on a magnitude of its deviation from an expected value (e.g., predetermined threshold, mean value) and a time contribution of its time segment to the corresponding wave shape. Such a weighting method (e.g., the weighting method **900** shown in FIG. 9 and described below) could be implemented, for example, in level monitor stage **81** or any similar or related data processing stage.

Stability monitor stage **91** reads the actual welding parameters on lines **34a, 36a** and **46b** at a rapid rate determined by oscillator **94**. In one exemplary embodiment, reading of the actual parameters occurs at a rate of 120 kHz for pulse welding. Stability monitor stage **91** analyzes the actual weld parameters for standard deviation or absolute deviation during a state of the wave shapes being output. Report memory or logic **92** records this deviation during a given state of the wave shape, as well as the actual value during the selected state of the wave shape. For a total weld cycle, these readings are accumulated, counted or otherwise processed to determine the quality of the welding and any trends toward weld defects.

In one exemplary embodiment, the readings (e.g., periodically accumulated sets of the readings) are weighted based on a plurality of criteria. The readings can be accumulated, for example, every 250 ms. In one exemplary embodiment, a set is weighted based on a magnitude of its deviation from an expected value (e.g., predetermined threshold, mean value) and a time contribution of its time segment to the corresponding wave shape. Such a weighting method (e.g., the weighting method 900 shown in FIG. 9 and described below) could be implemented, for example, in stability monitor stage **91** or any similar or related data processing stage.

A few wave shapes can be skipped when using either monitor stage **81** or monitor stage **91**. In one exemplary embodiment, after a start sequence, all of the wave shapes are monitored for analyzing the actual welding parameters during the various selected states of the wave shape. Several states of a given wave shape in a welding process are monitored and the results are recorded separately for each state to be analyzed for level conformity, trend and stability. When measuring stability, a standard deviation algorithm is used in monitor M to evaluate $I_a$, $V_a$ and/or WFS. This information is available to analyze each of the various segments of the wave shape forming a total weld cycle with a given cycle time. In practice, certain states, such as the peak current during a pulse wave shape are monitored to determine the stability and level deviations of the pulse welding process. In an STT welding process, monitor M records short circuit times for each wave shape, since these segments vary in time according to the external conditions of the welding process. Variation in short circuit time informs the welding engineer of adjustments to be implemented.

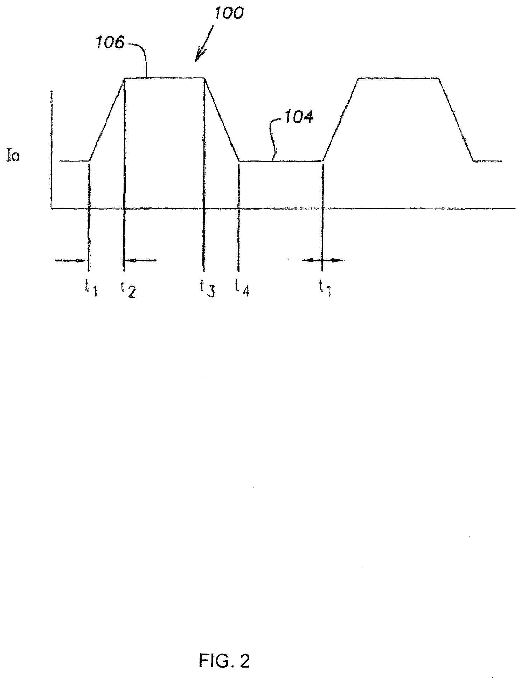

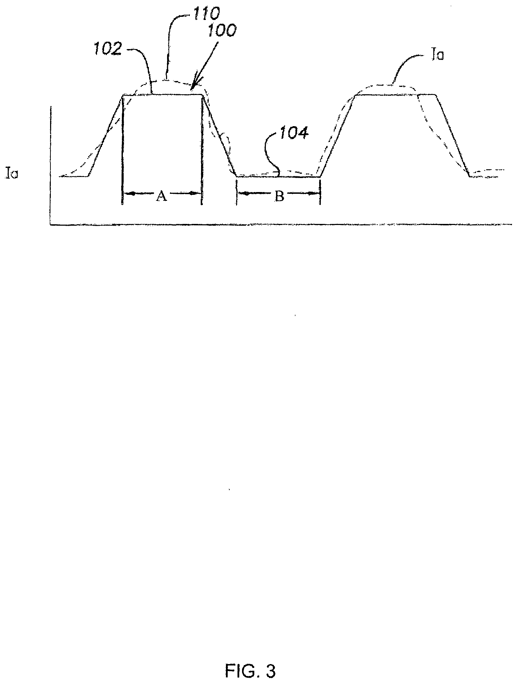

The series of rapidly repeating wave shapes generated by the standard wave shape generator **40** are divided into time states, as shown in FIGS. 2 and 3. The output current command wave shape is pulse wave shape 100 with a peak current **102** having a fixed duration of time segment A shown in FIG. 3 and a background current **104** with a variable time duration for segment B shown in FIG. 3. The wave shape is divided into segments at times $t_1$-$t_4$ so that the command interface **70** receives the particular state being processed by generator **40** at any given time. As shown in FIG. 3 by the dashed line **110,** the actual arc current from shunt 33 in FIG. 1 deviates from the command current signal of wave shape 100.

During the selected functional states, such as state A or state B, the actual arc current $I_a$ is read at a rate determined by oscillator **84** or oscillator **94.** In practice, this is a single software oscillator. Level monitor stage **81** records deviation in the ordinate direction between the actual parameter **110** and the command level of wave shape **100.** During the selected state, stability monitor stage **91** reads the statistical standard deviation of the actual parameter. States A and B are normally monitored for a pulse welding process. However, the ramp up state between $t_1$-$t_2$ and/or the ramp down state during $t_3$-$t_4$ can be monitored to control or at least read the activity of the actual parameter during these states of the wave shape. As illustrated, the background time segment B has a variable time, as shown by the variable time positions of time $t_1$. Consequently, the state being monitored can have a fixed time duration or a variable duration. When a variable duration, the state is monitored until the end of the duration. Report logic **82** senses this as a level from one time, i.e. $t_4$, to the successive time, i.e., $t_1$. As the time $t_1$ changes with respect to the time $t_4$, this time of each wave shape is recorded as a level which is compared to a known time, obtained from interface **70** by selection of the welding mode of generator **40.**

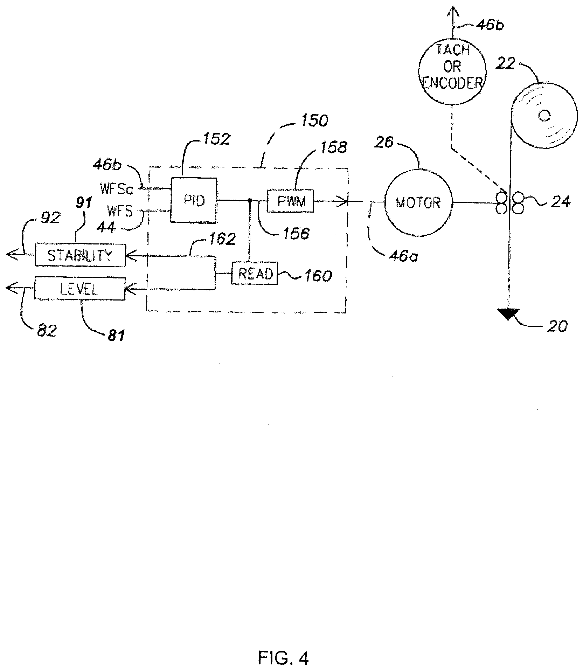

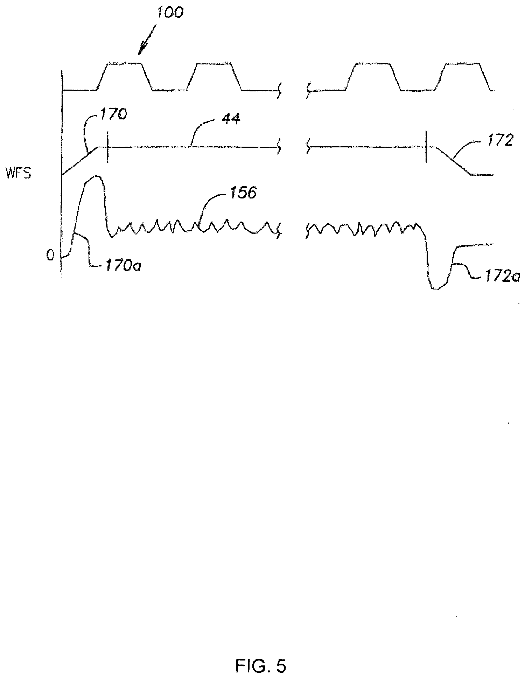

Monitor M monitors the actual welding parameters during specific selected states of the wave shapes; however, the monitor also has programming to operate the computer to determine the stability and/or level characteristics of an internal signal, such as the actual input to motor **26** on line **46a.** Such internal monitoring of the signal on line **46a** is set forth in the flow chart shown in FIG. 4 utilizing the signals shown in FIG. 5.

The microprocessor in the wire feeder includes a subroutine that is a PID comparing network similar to an error amplifier. This PID comparator is schematically illustrated as block **152** in FIG. 4 having a first input **46b** which is a wire feed speed WFS and a command signal on line **44.** The actual WFS on line **46b** is read by a tachometer or encoder connected to the drive rolls **24** of the feeder gear box or, alternatively, on a passive wheel attached to the wire to read the WFS. The output **156** of the PID is the voltage level at the input of the pulse width modulator **158** which is digitized in the microprocessor of the feeder. The output of the pulse width modulator is the command signal on line **46a** to motor **26** for controlling the wire feed speed of feeder **24.**

In accordance with one exemplary embodiment, monitor M includes the process program as schematically illustrated in FIG. 4 wherein the signal on line **156** is read by processing block **160** and the results are output on line **162** to the input of the level monitor stage **81** and/or the stability monitor stage **91,** as previously discussed with respect to the embodiment shown in FIG. 1. Consequently, an internal signal on line **156** is read at a rapid rate, exceeding 1 kHz, to check the level of this internal signal and/or the stability of this signal.

As illustrated in FIG. 5, the wave shape **100** for pulse welding extends as a succession of wave shapes from generator **40.** With respect to the wire feed speed, the command signal from generator **40** on line **44** takes the form shown in FIG. 5. It includes a start ramp up portion **170** and an ending ramp down portion **172.** These two portions cause a drastic increase or decrease in the command signal on line **44.** Between these abnormal command portions of the signal on line **44,** there is a generally level wire feed speed command which is employed for the purposes of testing stability and/or the level deviation of this internal signal on line **156.** In FIG. 5, the wire acceleration portion **170** is held until the speed is stabilized. This time is also monitored. Other internal signals can be monitored using the same concept as shown in FIGS. 4 and 5. The level monitor stage determines if the signal on line **156** exceeds the minimum or maximum for a prolonged time. For the wire feeder, this normally indicates a jam in the feeder system.

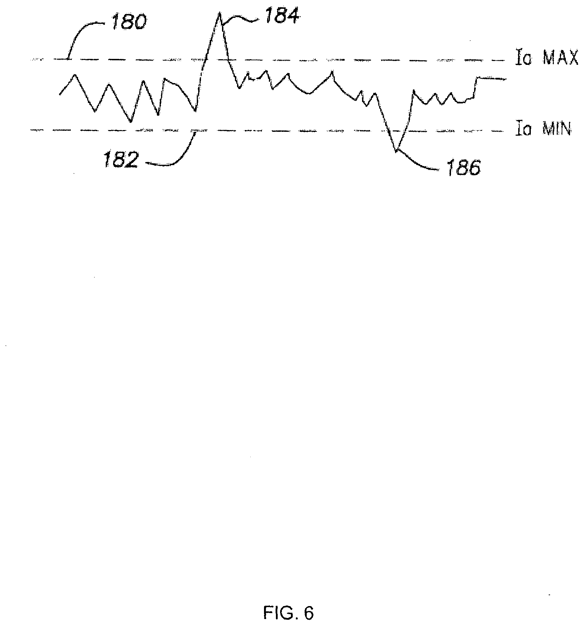

FIG. 6 shows the concept of a level monitor stage wherein threshold **180** is the maximum parameter level and threshold **182** is the minimum parameter level. When the parameter, illustrated as arc current, exceeds threshold **180** as indicated by transient **184,** there is a recorded event of over current. In a like manner, when the current is less than the minimum level **182,** as shown by transient **186,** there is recorded an under current event. Additionally, these events can be weighted based on a plurality of criteria. In one exemplary embodiment, each event is weighted based on a magnitude of its deviation from an expected value (e.g., predetermined threshold, mean value) and a time contribution of its time segment to the corresponding wave shape. Such a weighting method (e.g., the weighting method **900** shown in FIG. 9 and described below) could be implemented, for example, in level monitor stage **81,** stability monitor stage **91,** or any similar or related data processing stage.

The weighted events are counted or otherwise accumulated periodically to provide the output of the level monitor stage **81** as shown in FIG. 1. The weighted events can be accumulated, for example, every 250 ms. Consequently, the level monitor stage **81** detects excursions **184** above a preset threshold and excursions **186** below a preset level. These levels are set by the particular state in the interface **70.** Some states of a wave shape employ the level monitor stage **81** with thresholds and other states of the same wave shape may use the stability monitor stage **91.** Preferably, and in practice, both monitor stages are used for the selected state or states of the wave shape being interrogated by monitor M.

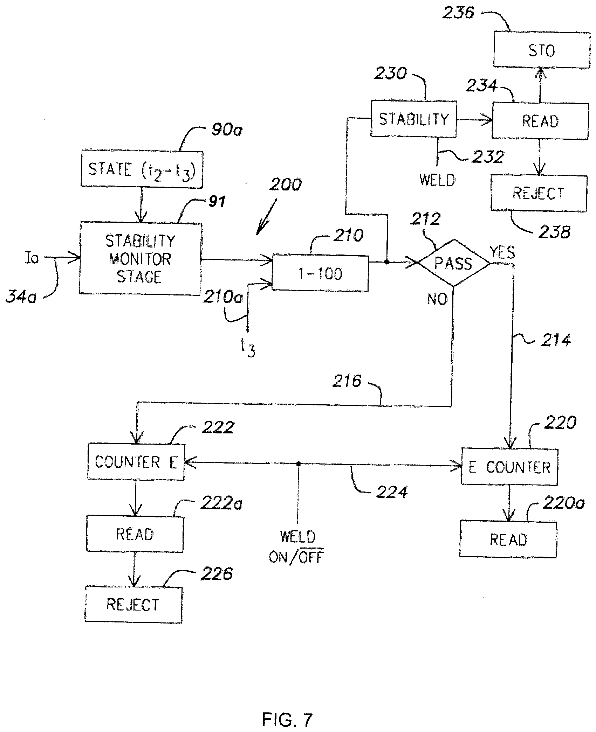

The embodiment shown in FIG. 1 monitors the level and/or stability of actual parameters for internal control signals during a selected state of the wave shape from generator **40** or during the total weld as explained in relationship to the disclosure in FIGS. 4 and 5. The monitor M in FIG. 1, as so far explained, provides weighted data for use in analyzing the weld cycle or the total operation of the welder over a work period of time. Various analysis programs are used to process data after the data has been determined and stored. In accordance with one exemplary embodiment, the weighted stability data from monitor stage **91** is analyzed by two programs as shown in FIG. 7. It is within the skill of the art to analyze the stability data in a variety of computer programs for recording, display and process intervention or evaluation.

As shown in FIG. 7, analysis program **200** uses the results of monitor stage **91** of monitor M (i.e., the weighted stability values). As an example, the program **200** is operated during monitoring of the time state between times $t_2$-$t_3$, which is the current peak portion of the wave shape as shown in FIGS. 2 and 3. Analysis program **200** is shown as a computer flow chart showing two systems employed to analyze the results of the stability stage **91** during the peak current state where the statistical standard deviation of actual current in line **34a** is calculated. In practice, there is a slight delay before the monitor stage **91** makes calculated deviations. The sample select feature to read $I_a$ during state $t_2$-$t_3$ but ignore $I_a$ otherwise is illustrated as sample selector or filter **90a.** This program delay at the start of time segment $t_2$-$t_3$ incorporated in filter **90a** allows the monitor to ignore fluctuations in the current which are experienced during each level shift in the various stages of the output wave shape.

In the programmed flow chart shown in FIG. 7, the stability output from monitor stage **91** is read by the computer program shown as block **210** which is reset as indicated by the logic on line **210a** at the end of each wave shape determined by the existence of time $t_3$. Consequently, the stability of each wave shape is captured by block **210.** This captured stability data is processed in accordance with two separate analysis programs.

The first program includes the pass analysis routine **212.** If the stability for a given wave shape passes the desired threshold set in block **212,** this information is output on line **214.** If the particular wave shape has a stability less than a desired threshold, a logic signal appears in line **216.** Counters **220, 222** are enabled by the logic on line **224** during each of the weld cycles. Consequently, the stability pass signals for each of the wave shapes during the weld cycle are counted in either counter **220** or counter **222.** Of course, the first portion of each state $t_2$-$t_3$ is ignored to allow the parameter $I_a$ to settle. The results of the two counters are read, stored or otherwise retained as indicated by the read block **220a, 222a,** respectively. In one exemplary embodiment, if the instability accumulated by counter stage **222** is beyond a desired number, the weld cycle is rejected as indicated by block **226.**

A second analysis implementation of computer program **200** shown in FIG. 7 is illustrated as block **230.** This is a program enabled during the weld cycle. The total instability of the weld cycle accumulating during all wave shapes is analyzed as a total number wherein **100** is the most stable arc. The output of this stability accumulator and analyzing stage is read, stored or otherwise retained as indicated by block **236.** If the reading stage **234** is below a set stability then the weld cycle is rejected as indicated by block **238.** A person skilled in the art can design other programs for analyzing the results of the monitor M from stability stage **91.** The computer program **200** exhibits two implementations to analyze the obtained weighted stability data. The two implementations can be selectively enabled (either one or the other or both) depending on the nature of the arc stability or weld quality problem the monitor is configured to detect. It is advantageous to read stability in only selected states of the wave shapes, because stability over a variable pulse is not obtainable.

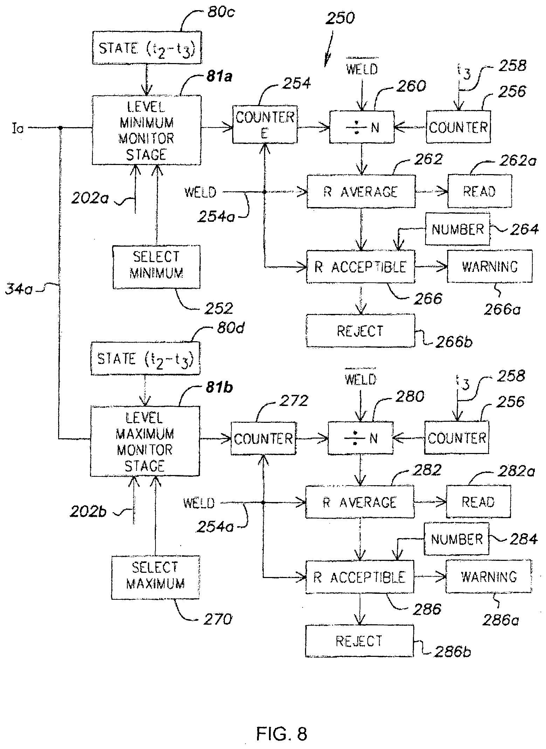

In accordance with another exemplary embodiment, the computer program for analyzing the results of level monitor stage **81** of monitor M (i.e., the weighted read values) is shown in FIG. 8. In this illustrated embodiment, level analysis program **250** processes the output from monitor level stage **81** in two separate routines, identified as a minimum monitor stage **81a** with filter **80c** and a maximum monitor stage **81b** with filter **80d.** Either one of these stages can be used separately or, in practice, they are combined. Subsection **81a** relates to the determination of transitions **186** shown in FIG. 6 which is an event where the actual parameter is below the threshold minimum **182.** The minimum level on line **202a** from generator **40** is used when stage **81a** is selected by program step **252.** These events are counted by block **254** for each of the weld cycles as indicated. The counter is enabled during the weld cycle by the logic on line **254a.** Counter **254** is a running total of the wave shapes used in a weld cycle. The number of wave shapes is obtained by counting the occurrences of time $t_3$ from the output of generator **40** as indicated by line **258.** As indicated before, the first part of the state is generally ignored to remove normal inconsistencies at the start of any particular state. Block **260** is the computer flow chart subroutine for dividing the accumulated minimum events **186** from monitor stage **81a** divided by the number N from the counter **256.** This provides an average of minimum transitions during the weld cycle, which is provided to subroutine **262.** The average minimum transitions are read, stored or otherwise output as indicated by block **262a.** If the average is above a certain threshold number provided by the wave generator or by the program step **264,** program routine **266** determines that the weld cycle is unacceptable. If acceptable, no action is taken. However, if the acceptable routine **266** determines that the average is merely approaching the number **264,** a warning signal is provided by block **266a.** Total unacceptability provides a weld reject signal by routine **266b.** A person skilled in the art can devise other computer programs for effecting the analysis of the minimum current deviation or transition of the actual parameter as it relates to a set threshold.

In FIG. 8, the maximum monitor stage **81b** operates in conjunction with the minimum stage **81a.** The maximum level is on line **202b** from generator **40** and is used when stage **81b** is selected by program **270.** Like data information and programming retains the same numbers. Counter **272** counts the number of events **184** during the state $t_2$-$t_3$. Subroutine **280** provides the average of events **184** during the various wave shapes formed during the weld cycle. This average in block **282** is read, stored or otherwise used as indicated by block **282a.** In block **286,** the acceptability subroutine is processed wherein the number indicated by block **284** output from generator **40** or otherwise implemented by computer program is compared with the average from block **282** to provide a warning signal as indicated by block **286a** when the average approaches the set number indicated by block **284.** If the number is reached, a reject subroutine is implemented as indicated by block **286b.**

In practice, stage **81a** and stage **81b** are implemented together and the average of both transitions from blocks **262** and **282** are analyzed by a read, acceptable number to give a warning and/or a rejection of a given weld cycle. Consequently, in practice, minimum level deviations are analyzed, maximum level deviations are analyzed, and total level deviations are analyzed. All of this is accomplished by the computer program as schematically illustrated in FIG. 8. The level stages **81a, 81b** output level conditions which are stored and/or displayed as discussed with report logic **82.** The level conditions output by the level stages **81a, 81b** can be weighted, as discussed herein.

In view of the above, the use of the magnitude and time contribution weights provide a more accurate measure of parameter stability and, thus, overall weld quality. In this manner, an easy to understand numerical value or score can be computed to quantify the overall quality of a weld. In one exemplary embodiment, a weld score between 0-100 or 0%-100% is calculated for a weld based on monitored welding conditions or parameters, such as those monitored by the exemplary embodiment shown in FIG. 1. Such a weighting method (e. g., the weighting method **900** shown in FIG. 9 and described below) could be implemented, for example, in level monitor stage **81,** stability monitor stage **91,** or any similar or related data processing stage.

A weighting method **900,** according to one exemplary embodiment, is shown in FIG. 9. The weighting method can be implemented, for example, in the monitor M. In an initial step **902** of the weighting method **900,** waves shapes of a weld cycle are divided into a series of time segmented portions or states. Then, in step **904,** weld parameters (e. g., voltage, amperage) corresponding to at least one of the states are sampled at a given rate. In one exemplary embodiment, the sampling rate is 120 kHz. In one exemplary embodiment, the sampling rate is greater than or equal to 120 kHz. In one exemplary embodiment, the sampling rate can be used to generate an interrupt for interrupt service routine (ISR) processing.

The sampled weld parameters are used to calculate weld data. In the exemplary weighting method **900,** the weld data include an execution count, a voltage sum, a voltage squared sum, an amperage sum, and an amperage squared sum. The execution count starts at zero and gets incremented by one for each sampling period (e. g., every 120 kHz). The voltage sum and the amperage sum start at zero and get increased by the sampled voltage and the sampled amperage, respectively, at each sampling period. Similarly, the voltage squared sum and the amperage squared sum start at zero and get increased by the square of the sampled voltage and the square of the sampled amperage, respectively, at each sampling period.

After a predefined sampling period, in step **906,** the sampled weld data is passed on for further processing (as described below), the weld data values are reset to zero, and the sampling process (i.e., step **904**) is repeated. In one exemplary embodiment, the sampling period is 250 ms. Each collection of sampled weld data forms an analysis packet. After further processing of the analysis packet (e. g., every 250 ms), additional weld data is available representing a current weld quality rating for the corresponding state. This additional weld data could be graphed and/or averaged. The average of these ratings over the length of the weld (i.e., the weld cycle) provides an overall quality indicator for the weld.

The further processing of the weld data of each analysis packet that occurs in step **906,** for each of the sampled states, results in the calculation of additional weld data. The additional weld data include an execution count, a voltage average, a voltage root mean square (RMS), a voltage variance, an amperage average, an amperage RMS, and an amperage variance. The value of the execution count of the additional weld data is copied from the value of the execution count of the weld data. The voltage average is calculated as the voltage sum (from the weld data) divided by the execution count. The voltage RMS is calculated as the square root of the quotient obtained by dividing the voltage squared sum (from the weld data) by the execution count. The voltage variance is calculated as the voltage RMS minus the voltage average. The amperage average is calculated as the amperage sum (from the weld data) divided by the execution count. The amperage RMS is calculated as the square root of the quotient obtained by dividing the amperage squared sum (from the weld data) by the execution count. The amperage variance is calculated as the amperage RMS minus the amperage average.

After step **906,** subsequent processing depends on whether the current weld is a training weld to be used in determining weld quality parameters or a normal weld to be evaluated against such weld quality parameters. Thus, in step **908,** it is determined whether the current weld is a training weld or a normal weld. In one exemplary embodiment, the default condition is that a weld is a normal weld unless otherwise indicated (e. g., by user input).

If the current weld is determined in step **908** to be a training weld, the following additional weld data values are saved for a significant portion of the training weld (e.g., 20-30 seconds): the execution count, the voltage average, the voltage variance, the amperage average, and the amperage variance, whereas the other weld data values and additional weld data values can be disregarded. The significant portion of the training weld is the training period. In one exemplary embodiment, the training period corresponds to at least **80** consecutive analysis packets (i.e., sampling periods).

Thereafter, in step **910,** weld quality parameters are calculated using the additional weld data values saved during the training period. For example, the following weld quality parameters are calculated for each of the sampled states: a quality execution count average, a quality execution count standard deviation, a quality voltage average, a quality voltage standard deviation, a quality amperage average, a quality amperage standard deviation, a quality voltage variance average, a quality voltage variance standard deviation, a quality amperage variance average, and a quality amperage variance standard deviation.

The quality execution count average is calculated as the average of the execution counts from all of the analysis packets processed during the training period. The execution counts could be rounded to integers. The quality execution count standard deviation is calculated as the standard deviation of the execution count from each analysis packet processed during the training period relative to the quality execution count average. The quality voltage average is calculated as the average of the voltage averages from all of the analysis packets processed during the training period. The quality voltage standard deviation is calculated as the standard deviation of the voltage average from each analysis packet processed during the training period relative to the quality voltage average. The quality amperage average is calculated as the average of the amperage averages from all of the analysis packets processed during the training period. The quality amperage standard deviation is calculated as the standard deviation of the amperage average from each analysis packet processed during the training period relative to the quality amperage average. The quality voltage variance average is calculated as the average of the voltage variances from all of the analysis packets processed during the training period. The quality voltage variance standard deviation is calculated as the standard deviation of the voltage variance from each analysis packet processed during the training period relative to the quality voltage variance. The quality amperage variance average is calculated as the average of the amperage variances from all of the analysis packets processed during the training period. The quality amperage variance standard deviation is calculated as the standard deviation of the amperage variance from each analysis packet processed during the training period relative to the quality amperage variance. As noted above, these quality parameters, when based on delivery of a confirmed good or otherwise acceptable weld, can be used as benchmarks to measure or otherwise rate subsequent welds.

If the current weld is determined in step **908** to be an evaluation weld (i.e., a weld requiring evaluation of its quality), as opposed to a training weld, none of the weld data or additional weld data need be saved. Instead, the results of various quality calculations are obtained and saved. These quality calculations include initially detecting, in step **914,** the presence of various outliers. An outlier is a data point or value that is more than a threshold distance from a mean value to which the data point or value contributes. In one exemplary embodiment, an outlier is a value that falls outside the limit of three standard deviations from the mean value.

In the weighting method **900,** the outliers sought in step **914** include execution outliers, voltage outliers, voltage variance outliers, amperage outliers, and amperage variance outliers. For each of the monitored states, each of the analysis packets are evaluated to detect the presence of any of these outliers.

If an analysis packet satisfies the following relationship, it is considered an execution outlier: absolute value of (execution count-quality execution count average)>(3xquality execution count standard deviation). If an analysis packet satisfies the following relationship, it is considered a voltage outlier: absolute value of (voltage average-quality voltage average)>(3xquality voltage standard deviation). If an analysis packet satisfies the following relationship, it is considered a voltage variance outlier: absolute value of (voltage variance-quality voltage variance average)>(3xquality voltage variance standard deviation). If an analysis packet satisfies the following relationship, it is considered an amperage outlier: absolute value of (amperage average-quality amperage average)>(3xquality amperage standard deviation). If an analysis packet satisfies the following relationship, it is considered an amperage variance outlier: absolute value of (amperage variance-quality amperage variance average)>(3xquality amperage variance standard deviation).

After detection of these outliers, a two-step weighted sum (i.e., from steps **916** and **918**) of each outlier is used in calculating a quality indicator for the corresponding analysis packets.

The first step (i.e., step **916**) in weighting each of the outliers is determined by the magnitude of the outlier relative to a three standard deviation limit. In general, approximately 0.3% of the data points or values could fall outside the limit of three standard deviations and, thus, be considered an outlier. The weighting of the outlier increases as its value increases above the limit of three standard deviations. The outlier is weighted at a full 100% at four standard deviations and is weighted at a maximum of 200% at five standard deviations. In general, the probability of a fully (i.e., 100%) weighted outlier occurring in a normal data set is 1 in 15,787.

Thus, in step **916,** each of the outliers is weighted in accordance with this approach. The weight to be applied to each execution outlier is calculated as the absolute value of (amount above three standard deviation limit/quality execution count standard deviation), with a maximum weight value being 2.0. The weight to be applied to each voltage outlier is calculated as the absolute value of (amount above three standard deviation limit/quality voltage standard deviation), with a maximum weight value being 2.0. The weight to be applied to each voltage variance outlier is calculated as the absolute value of (amount above three standard deviation limit/quality voltage variance standard deviation), with a maximum weight value being 2.0. The weight to be applied to each amperage outlier is calculated as the absolute value of (amount above three standard deviation limit/quality amperage standard deviation), with a maximum weight value being 2.0. The weight to be applied to each amperage variance outlier is calculated as the absolute value of (amount above three standard deviation limit/quality amperage variance standard deviation), with a maximum weight value being 2.0.

The second step (i.e., step **918**) in weighting each of the outliers is determined by the execution count of the outlier's state. In particular, the value of each outlier is multiplied by the execution count of the outlier's state, thereby accounting for the time contribution of the state relative to the overall wave shape. In this manner, states that have larger execution counts (i.e., execution times) produce outliers with correspondingly heavier weighting. Consequently, as the execution time for a particular outlier increases, the weight of the outlier will also increase.

The weighting of the outliers, in steps **916** and **918,** produce a set of final weighted outliers including final weighted execution outliers, final weighted voltage outliers, final weighted voltage variance outliers, final weighted amperage outliers, and final weighted amperage variance outliers. These final weighted outliers are summed in step **920** to produce a final weighted outlier sum for each analysis packet. Thereafter, determination of a quality indicator for each of the analysis packets is calculated, in step **922,** as the quotient obtained by dividing a perfect quality value minus the final weighted outlier sum by the perfect quality value. The perfect quality value is equal to the execution count for the analysis packet multiplied by the number of outlier categories (i.e., in this case five).

Thus, an instantaneous quality indicator (i.e., for the current completed analysis packet) can be determined during the welding process and communicated to the welder or otherwise utilized. In this manner, potential problems can be detected as they occur, i.e., during the welding process, as opposed to only after the weld is complete, when it is likely too late to take any corrective action.

Furthermore, the average of the quality indicators aggregated up to any point of time during the welding process can be averaged to determine a quality indicator of the weld up to that point of time. For example, after the welding process is complete, all of the individual quality indicators can be averaged to obtain an overall quality indicator, score, grade, rating or the like for the completed weld. The overall quality indicator for the weld can be compared against a predetermined quality indicator (e.g., derived from a training weld) that reflects the minimum quality indicator value for an acceptable weld.

In this manner, a quality of a weld can be determine accurately, efficiently, consistently, and/or automatically, in real-time or near real-time. This is particularly advantageous since visible inspection of a weld is not always sufficient to gauge its quality and since an operator might not detect or otherwise appreciate deviations or other problems during the welding process that can affect overall weld quality.

In some exemplary embodiments, a quality indicator (i.e., a weld score) for a weld is an effective tool for evaluating welds being repetitively produced under substantially the same conditions and according to substantially the same arc welding process, such as during an automated (e.g., robotic) welding process. By calculating instantaneous, periodic, and/or overall weld scores for each weld, an automated quality control process can be adapted for the arc welding process. In particular, a minimum acceptable weld score or range of acceptable weld scores is initially identified as a threshold, according to the weld conditions and the arc welding process. Thereafter, each weld has its (instantaneous, periodic, and/or overall) weld score compared against the threshold to quickly and accurately determine whether the weld should be accepted or rejected. Additionally, by evaluating trends across the weld scores for a production run or set of runs, problems in the production process can be more readily identified, and/or the production process can be more readily optimized.

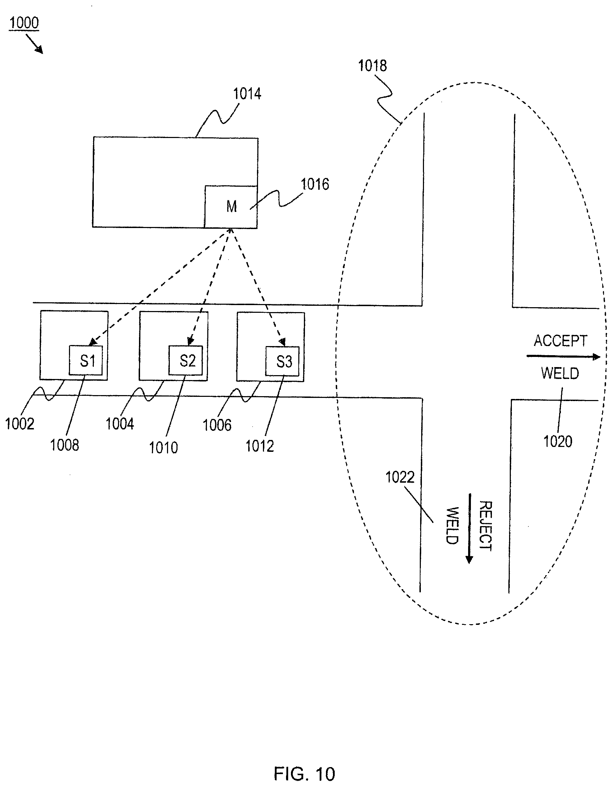

A conceptual production line **1000** is shown in FIG. 10, wherein a first weld score S1 **1002**, a second weld score S2 **1004**, and a third weld score S3 **1006** are associated with welds performed on a first workpiece WP1 1008, a second workpiece WP2 **1010,** and a third workpiece WP3 **1012**, respectively, by a welder or welding station **1014** including an integrated monitor M **1016.** One of ordinary skill in the art will appreciate that the different welds could be performed on the same workpiece.

The weld scores are then compared against a predetermined acceptable weld score threshold to determine whether each of the welds should be accepted or rejected. This comparison can be done by the welder/welding station or by a separate device or at a separate location (e.g., an evaluation station **1018**). In one exemplary embodiment, the comparison between the weld score and the threshold is performed manually. In one exemplary embodiment, an automated and manual comparison are performed. In one exemplary embodiment, the weld score is used to determine whether a manual inspection of the corresponding weld is warranted. In one exemplary embodiment, the weld scores are used, at least in part, to determine an overall efficiency of the production line.

In one exemplary embodiment, one or more evaluation stations **1018** are situated along the production line **1000** to measure welds at specified stages of the production process. If an evaluation station **1018** determines that a weld score for a weld meets or exceeds a predetermined acceptable weld score threshold, the evaluation station **1018** accepts the weld by issuing an accept weld command **1020**. In response to the accept weld command **1020**, the workpiece including the acceptable weld is allowed to continue along the production line **1000** for further processing.

Conversely, if the evaluation station **1018** determines that the weld score for the weld falls below a predetermined acceptable weld score threshold, the evaluation station **1018** rejects the weld by issuing a reject weld command **1022**. In response to the reject weld command **1022**, the workpiece including the unacceptable weld is routed off of the production line **1000** or otherwise removed from the production line **1000** (e.g., manually removed). Thereafter, the workpiece having the rejected weld can be subjected to further processing, for example, rehabilitating or otherwise repairing the rejected weld, or recycling the workpiece entirely.

In one exemplary embodiment, each accept weld command **1020** and/or reject weld command **1022** is logged or otherwise stored for later review and analysis. In this manner, trends relating to the welding process and/or the production process can be more readily identified, which in turn, may make it easier to increase the overall efficiency of the production line utilizing the welding process.

In some exemplary embodiments, quality indicators (i.e., weld scores) computed for welds can be used in an innovative approach to providing instruction or otherwise teaching an operator manually performing an arc welding process. In particular, as the operator is using a welder (e.g., the electric arc welder **10**) to create the weld, instantaneous and/or periodic weld scores are determined for the weld by the welder (e.g., via a monitor **M** of the welder) and are used to provide direct feedback to the operator relating to the current quality of the weld. As noted above, these weld scores are based on weighted, statistical measurements that more accurately reflect weld quality as compared to a mere visual inspection of the weld. In particular, the weld scores are compared against a predetermined acceptable weld score or range of acceptable weld scores to determine whether any corrective action is necessary by the operator. Additionally, the weld scores are evaluated over time to determine whether any trend in moving away from an acceptable weld score (e.g., as evidenced by a continuing reduction in the weld score) is present.

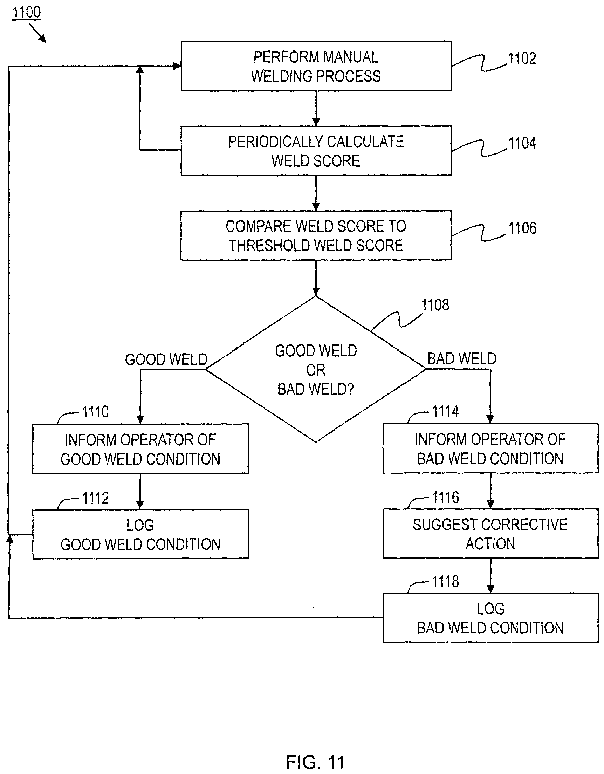

A method of instruction **1100**, according to one exemplary embodiment, is shown in FIG. 11. The method **1100** begins with an operator starting to perform a welding process in step **1102.**

During the welding process, a weld score is periodically calculated (based on one or more sampled or otherwise measured parameters), in step **1104**, to reflect a current status of the weld. The weld score can be calculated as an instantaneous measurement reflecting the current status of the weld or as an average of several measurements reflecting the status of the weld over a period of time (corresponding to the measurements) during the welding process. In one exemplary embodiment, the weld score is calculated by averaging all of the measurements taken since the welding process started, which reflects a current overall status of the weld.

Next, the weld score is compared to a predetermined threshold weld score in step **1106**. The threshold weld score is a minimum weld score for a good or otherwise acceptable weld status. If the weld score is greater than or equal to the threshold weld score, the current status of the weld is determined to be good in step **1108.** Otherwise, the current status of the weld is determined to be bad in step **1108.**

If the current status of the weld is good, the operator is provided with an indication that the weld is good, in step **1110,** which suggests that the welding process is being performed properly. Thereafter, the current status of the weld is logged, in step **1112,** for later review, analysis, and/or other use. The method of instruction **1100** then continues to monitor the welding process being performed by the operator, as described above.

If the current status of the weld is bad, the operator is provided with an indication that the weld is bad, in step **1114,** which suggests that the welding process is being performed improperly. Thereafter, the current status of the weld is logged, in step **1118,** for later review, analysis, and/or other use. The method of instruction **1100** then continues to monitor the welding process being performed by the operator, as described above.

The aforementioned indications can be provided to the operator in any manner sufficient to inform the operator during the welding process. In one exemplary embodiment, the indication is provided to the operator visually, such as on a display device integrated with or in close proximity to the welder. In one exemplary embodiment, the instruction is visually displayed on a protective visor or headgear worn by the operator. In one exemplary embodiment, the instruction is provided to the operator audibly, such as through a speaker integrated with or in close proximity to the welder. In one exemplary embodiment, the instruction is audibly played in protective headgear worn by the operator.

In one exemplary embodiment, if the current status of the weld is bad, the operator receives instruction on what corrective action or actions should be taken in step **1116**. In one exemplary embodiment, the instruction is provided in real-time during the welding process. The instruction could, for example, involve a suggested change in a position of an electrode (i.e., wire) relative to the workpiece or a suggested change in a rate of movement of the wire relative to the workpiece.

Various devices and techniques could be used to determine possible corrective actions to be taken, such as modeling operator and/or welding conditions during a welding process that results in a verified good weld and using the resulting model data to evaluate other operators carrying out similar welding processes under similar conditions. Artificial intelligence and related simulations could also be used to build such a model. Furthermore, sensors could be used to build such a model.

In one exemplary embodiment, one or more sensors are used to determine aspects of the welding process, for example, a current temperature of the workpiece, a level of shielding gas being delivered, and/or a composition of the shielding gas. In one exemplary embodiment, one or more sensors are used to determine environmental conditions that could affect the welding process, for example, wind conditions and/or humidity conditions. In one exemplary embodiment, one or more sensors are used to determine operator conditions that could affect the welding process, for example, the distance of the operator's hand from the workpiece and/or the angle of the operator's hand from the workpiece. Data from these or other sensors is compared to model data to identify the instruction on what corrective action or actions should be taken by the operator.

In one exemplary embodiment, the corrective action instruction is provided to the operator visually, such as on a display device integrated with or in close proximity to the welder. In one exemplary embodiment, the instruction is visually displayed on a protective visor or headgear worn by the operator. In one exemplary embodiment, the instruction is provided to the operator audibly, such as through a speaker integrated with or in close proximity to the welder. In one exemplary embodiment, the instruction is audibly played in protective headgear worn by the operator.

Thus, the method of instruction **1100** provides real-time feedback to the operator during the welding process, such that the operator readily knows when the weld is moving from a good condition toward a bad condition and when the weld is moving from a bad condition toward a good condition. Furthermore, the method of instruction **1100** can suggest corrective action intended to improve the current (and thus overall) condition of the weld. As changes in the weld condition are often attributable to the actions of the operator, the feedback provided by the method of instruction **1100** (including any suggested corrective action) teaches the operator good welding techniques. Furthermore, good welding techniques of the operator are reinforced by the continued confirmation of a good weld status.

The method of instruction **1100,** or aspects thereof, can also readily be adapted or otherwise applied to a simulated welding process. In one exemplary embodiment, the method of instruction **1100** is applied to a welding simulator utilizing virtual reality technology.

In some exemplary embodiments, a quality indicator (i.e., a weld score) computed for a weld performed by an operator can be used in an innovative approach to certifying the operator with respect to a particular welder, welding process, or welding course, similar to how grades are used in general education. For example, the weld scores (e.g., an overall weld score) calculated in accordance with the method of instruction **1100**, or aspects thereof, provide a convenient platform for certifying the operator. The operator must obtain a weld score or scores that exceed predefined threshold weld scores to be certified with respect to the welder, welding process, or welding course. If the operator fails to be certified, the method of instruction **1100** can identify areas that need improvement to the operator. As described herein, additional functionality (e.g., provided by software running in or external to the welder) can be used to measure other parameters that might be useful in certifying the operator. For example, the method of instruction **1100** could be modified to include tracking how much time the operator spent actually welding during the welding process or course. As another example, the method of instruction **1100** could be modified to include tracking the amount of consumables (e.g., wire) used by the operator during the welding process or course.

In addition to being used to certify an operator, the weld scores (and other parameters) can also be used to differentiate one operator from another. For example, notwithstanding that two operators both achieve passing scores and are certified with respect to a particular welder, welding process, or welding course, the scores of the two operators might be vastly different. Accordingly, a certified operator with a much higher score could be chosen over another certified operation having a lower score.

In some exemplary embodiments, quality indicators (i.e., weld scores) computed for welds and other related parameters and information can be used to assist an instructor teaching multiple students a welding technique, process, program, course, or the like. A welding class often includes a theoretical component and a practical component. The theoretical component is generally taught in the form of a lecture, discussion, or demonstration in a classroom or similar setting. Typically, a welding school or other environment for teaching students the practical component of the class will include individual locations such as booths, similar to welding stations in a factory. Each student is assigned to his or her own booth for performing the practical component of the course.

It is rather easy for the instructor to approximate how much time each student spends on the theoretical component of the class, for example, by tracking each student's class attendance and/or participation during discussions relating to the theoretical component. However, it is difficult for the instructor to gauge how much time each student actually spends on the practical component of the class because the instructor cannot be at all of the booths all of the time. For example, the booths may be constructed and/or arranged such that the instructor's line of sight only extends to a single booth at a time, i.e., the booth at which the instructor is currently present. The students at the other booths could be doing something other than welding (e.g., eating, sleeping, talking on the phone) without the instructor knowing. It is also difficult for the instructor to readily determine which of the students would most likely benefit from the instructor's personal attention, at any given time. Thus, the instructor may wind up devoting time to one student notwithstanding that another student has a greater need for the instructor's personal attention.

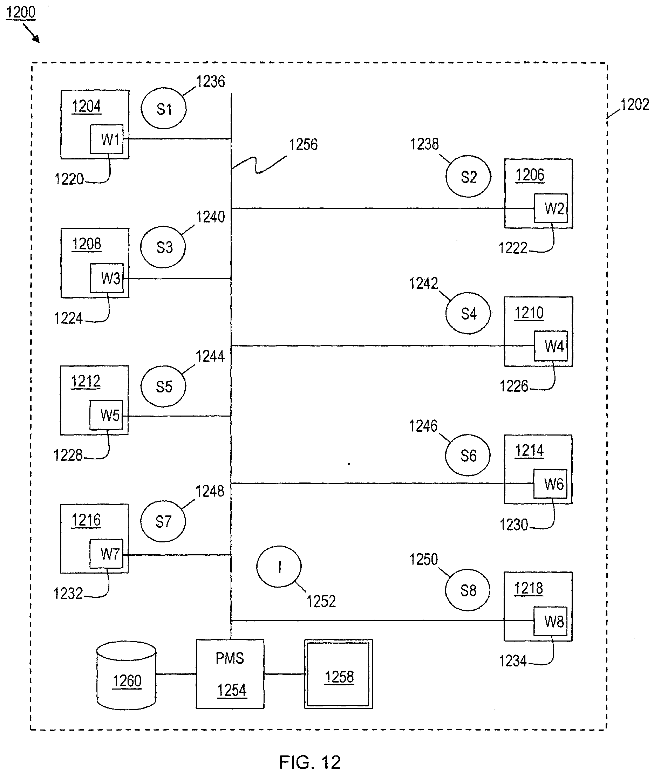

A system 1200 for monitoring students learning a welding technique, process, program, course, or the like, such as an arc welding process, according to one exemplary embodiment, is shown in FIG. 12. The system 1200 includes an area of instruction 1202, such as a classroom or shop, in which eight booths 1204, 1206, 1208, 1210, 1212, 1214, 1216, and 1218 are situated. Each of the booths includes a welder. In particular, a first welder W1 1220 is located in the first booth 1204, a second welder W2 1222 is located in the second booth 1206, a third welder W3 1224 is located in the third booth 1208, a fourth welder W4 1226 is located in the fourth booth 1210, a fifth welder W5 1228 is located in the fifth booth 1212, a sixth welder W6 1230 is located in the sixth booth 1214, a seventh welder W7 1232 is located in the seventh booth 1216, and an eighth welder W8 1234 is located in the eighth booth 1218. Furthermore, a student is assigned to each booth. In particular, a first student S1 1236 is assigned to work in the first booth 1204, a second student S2 1238 is assigned to work in the second booth 1206, a third student S3 1240 is assigned to work in the third booth 1208, a fourth student S4 1242 is assigned to work in the fourth booth 1210, a fifth student S5 1244 is assigned to work in the fifth booth 1212, a sixth student S6 1246 is assigned to work in the sixth booth 1214, a seventh student S7 1248 is assigned to work in the seventh booth 1216, and an eighth student S8 1250 is assigned to work in the eighth booth 1218.

The area of instruction 1202 is situated such that an instructor 1252 can freely move from one booth to another to interact with the students.

In one exemplary embodiment, each of the welders W1, W2, W3, W4, W5, W6, W7, and W8 includes an integrated monitor M, like the welder 10 shown in FIG. 1. When a student is using a welder to create a weld, instantaneous and/or periodic weld scores are determined for the weld by the welder (via the monitor M) and are used to provide direct feedback to the student relating to the current quality of the weld. As described herein, these weld scores are based on weighted, statistical measurements that more accurately reflect weld quality as compared to a mere visual inspection of the weld. In particular, the weld scores are compared against a predetermined acceptable weld score or range of acceptable weld scores (e.g., ascertained from a prior baseline weld) to determine whether any corrective action is necessary by the student. Additionally, the weld scores are evaluated over time to determine whether any trend in moving away from an acceptable weld score (e.g., as evidenced by a continuing reduction in the weld score) is present.

Each of the welders W1, W2, W3, W4, W5, W6, W7, and W8 is in communication with a production monitoring system (PMS) 1254 over a network 1256. The network 1256 can be a wired or a wireless network. In one exemplary embodiment, the network 1256 is an Ethernet network.

The PMS 1254 can be implemented using software, hardware, and combinations thereof, without departing from the scope of the general inventive concepts. In one exemplary embodiment, the PMS 1254 is implemented as software running on a general purpose computer (e.g., a PC) with peripherals such as a display device 1258 and a data store 1260 connected thereto. In one exemplary embodiment, the PMS 1254 could include logic integrated with each of the welders, as in the case of the monitors M. As noted above, the PMS 1254 is in data communication with the welders W1, W2, W3, W4, W5, W6, W7, and W8 over the network 1256.

The PMS 1254 is a weld data collection and monitoring tool that is operable, for example, to collect short-term and long-term welding logs complete with statistics for each recorded weld. The PMS 1254 can also track other production related parameters and conditions, such as wire consumption. In the system 1200, the PMS 1254 collects data from each of the welders W1, W2, W3, W4, W5, W6, W7, and W8 to determine an amount of time spent by the respective students S1, S2, S3, S4, S5, S6, S7, and S8 in creating the weld. The amount of time spent by each of the students S1, S2, S3, S4, S5, S6, S7, and S8 (i.e., the welding times) can be saved by the PMS 1254 to the data store 1260 for later retrieval and use. Additionally, the PMS 1254 receives the weld scores from each of the welders W1, W2, W3, W4, W5, W6, W7, and W8 over the network 1256, which can then be saved by the PMS 1254 to the data store 1260 for later retrieval and use. Thus, the PMS 1254 is capable of generating and storing logs of welding times and weld scores for multiple students over multiple evaluation periods, which can be a tremendous resource for the instructor 1252 in teaching and assessing the students.

Additionally, the PMS 1254 can display, in real time, the current welding times for each of the students S1, S2, S3, S4, S5, S6, S7, and S8, in combination with the current weld scores for each of the students S1, S2, S3, S4, S5, S6, S7, and S8, on the display device 1258. In this manner, the instructor 1252, by observing the display device 1258, can get an instant and accurate assessment of the current status of each of the students and their respective welds.

This allows the instructor **1252** to better proportion his or her time in relation to those students exhibiting the greatest need.

In the system **1200,** the welding times and weld scores can be displayed in any manner, for example, as numerical data and/or as graphical data. In one exemplary embodiment, the PMS **1254** provides a web-based user interface that supports accessing data, viewing data, generating reports, etc. via a web browser.

The system **1200** is readily scalable to accommodate any number of students, as well as multiple instructors.

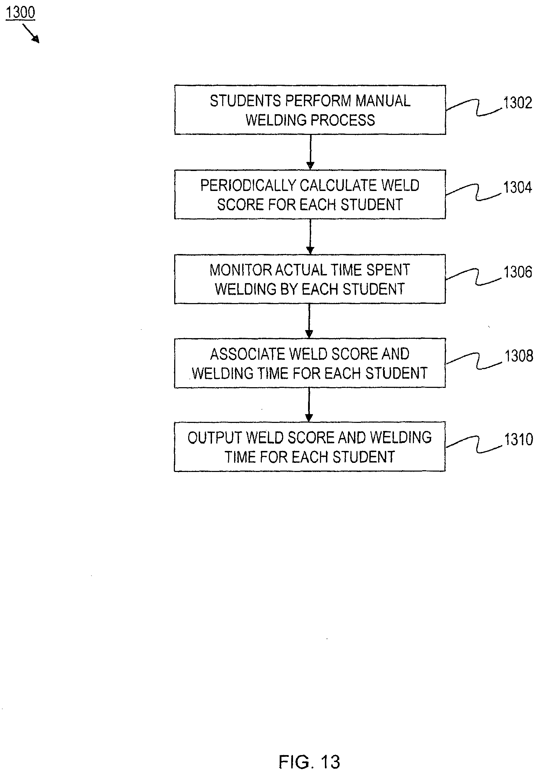

A method **1300** of monitoring students learning a welding technique, process, program, course, or the like, such as an arc welding process, according to one exemplary embodiment, is shown in FIG. 13. The method **1300** involves multiple students performing the arc welding process in step **1302**. In one exemplary embodiment, the students perform substantially the same arc welding process under substantially the same conditions and at substantially the same time.

During the arc welding process, a weld score is periodically calculated (based on one or more sampled or otherwise measured parameters) for each student, in step **1304**, to reflect a current status of the student's weld. The weld score can be calculated as an instantaneous measurement reflecting the current status of the student's weld or as an average of several measurements reflecting the status of the student's weld over a period of time (corresponding to the measurements) during the arc welding process. In one exemplary embodiment, the student's weld score is calculated by averaging all of the measurements taken since the arc welding process started, which reflects a current overall status of the student's weld.

During the evaluation period of the method **1300**, an amount of time the each student spends performing the arc welding process (i.e., actually welding) is determined in step **1306**. Operational data collected from the welder of each student can be used to determine the students' welding times.

Each weld score is associated with its corresponding student in step **1308**. Similarly, each welding time is associated with its corresponding student in step **1308**. Identifying information (e.g., a serial number) from the welder assigned to each student can be used to associate data collected from and/or generated by the welders (e.g., the weld score, the welding time) with the respective students.

Once the weld scores and welding times are associated with the respective students, this information can be output in any manner in step **1310**. For example, a report of all of the students and their respective weld scores and welding times can be output to a display device, such as a monitor. As another example, information on the students and their respective weld scores and welding times can be logged and stored in a data store, such as a disk drive or flash drive, for later retrieval and use. In one exemplary embodiment, the information is output periodically. In one exemplary embodiment, the information is output at the end of the evaluation period.

The weld scores and/or the welding times can also be used to generate additional identifying information for the students. For example, the weld score and/or the welding time for a student can be compared against predetermined thresholds. In this manner, based on the weld score and/or the welding time for a student, a pass or a fail determination can be determined for the weld of the student.

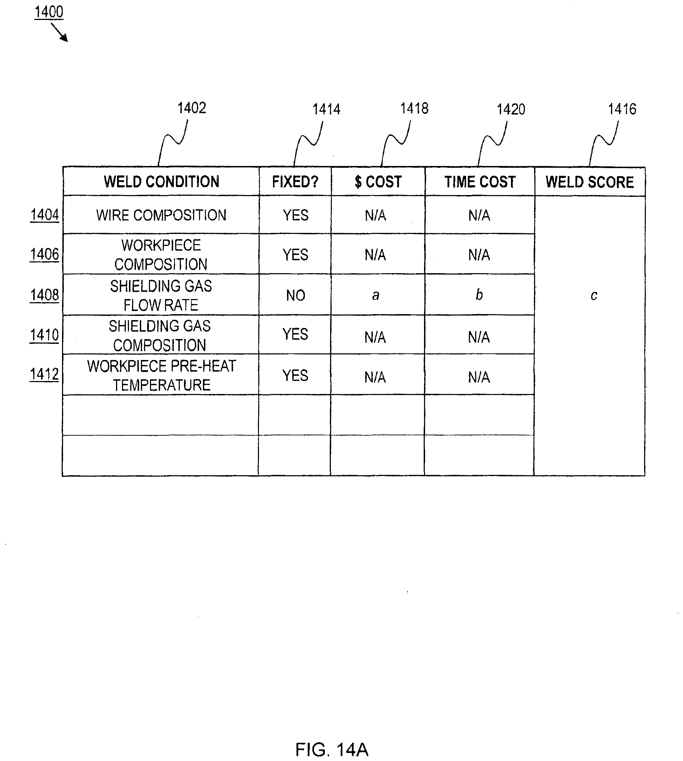

In some exemplary embodiments, weld scores computed for welds can be used in an innovative approach to identifying potential cost savings for a welding process. In one exemplary embodiment, a cost analysis (e.g., cost-effective analysis, cost-benefit analysis) is performed for a welding process based on a series of welds performed according to the welding process. Data **1400** corresponding to exemplary welds, as shown in FIGS. 14A-14B, can be used in performing the cost analysis.

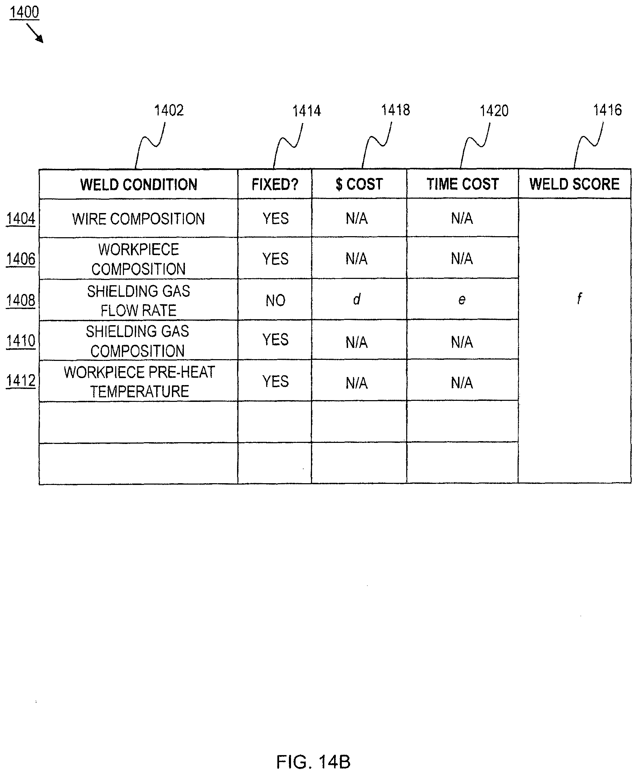

First, a plurality of weld conditions **1402** that affect overall weld quality are selected. For example, in FIGS. 14A and 14B, the weld conditions **1402** include wire characteristics (e.g., wire composition **1404,** wire diameter, coating), workpiece characteristics (e.g., workpiece composition **1406,** workpiece thickness), a shielding gas flow rate **1408,** a shielding gas composition **1410,** and/or a workpiece pre-heat temperature **1412.** Next, one of these weld conditions **1402** is varied, as indicated at **1414,** across the series of welds, while all of the remaining weld conditions **1402** are fixed, as indicated at **1414,** across the series of welds.

For each of the welds in the series, a weld score **1416** is also calculated based on the current weld conditions **1402, 1414**. The weld score **1416** represents a measure of the overall quality of the weld created under the weld conditions. As noted above, these weld scores are based on weighted, statistical measurements that more accurately reflect weld quality as compared to a mere visual inspection of the weld.

Additionally, for each of the welds in the series, a cost for creating the weld is determined. In one exemplary embodiment, the cost includes monetary expenditures related to producing the weld, represented as a monetary cost **1418** for the weld. In one exemplary embodiment, the cost includes a total time required to complete the weld, represented as a time cost **1420** for the weld. Each weld in the series is associated with its corresponding weld score and cost.

FIGS. 14A and 14B include, respectively, data **1400** for two welds in a series of welds wherein among the weld conditions **1402**, the wire composition **1404**, the workpiece composition **1406**, the shielding gas composition **1410**, and the workpiece pre-heat temperature **1412** are fixed, as shown at **1414**, across the series of welds, while the shielding gas flow rate **1408** is varied (e.g., incrementally increased or decreased), as shown at **1414**, across the series of welds.

For the weld corresponding to FIG. 14A, a monetary cost **1418** of *a*, a time cost **1420** of *b*, and a weld score **1416** of *c* are calculated or otherwise determined. For the weld corresponding to FIG. 14B, a monetary cost **1418** of *d*, a time cost **1420** of e, and a weld score **1416** of f are calculated or otherwise determined. Thus, if it is determined that a<d, b<e, and c=f, it can be deduced that the shielding gas flow rate **1408** of FIG. 14A is superior to the shielding gas flow rate **1408** of FIG. 14B, since both a cost and time savings are realized without any reduction in overall weld quality by the shielding gas flow rate **1408** of FIG. 14A as compared to the shielding gas flow rate **1408** of FIG. 14B. If it is instead determined that a<d, b>>e, and c=f, it can be deduced that the shielding gas flow rate **1408** of FIG. 14A provides a cost savings without any reduction in overall weld quality, but at a substantially increased time cost, as compared to the shielding gas flow rate **1408** of FIG. 14B.

In this manner, a user will be able to readily identify the impact the varied weld condition has on overall weld quality in the series and, thus, in the corresponding welding process. In this manner, the user can determine whether varying the weld condition (and in what manner) will allow the user to obtain a more desired weld quality, a more desired cost, or both. Consequently, as more welds are performed and the corresponding data analyzed, the impact of any one or more weld conditions on the overall welding process can be readily determined and evaluated, such that more informed cost saving decisions (e.g., relative to money, time, and quality tradeoffs) can be made.

The cost analysis could be expanded to include additional series of welds, wherein different weld conditions are varied in the different series. In this manner, the user can identify a desired value or setting for a plurality of the weld conditions to achieve a desired outcome (e.g., acceptable weld quality and acceptable cost). These desired values or settings for the weld conditions could then be saved in a profile associated with the welder and the welding process for subsequent retrieval and use for the same welder and welding process, thereby increasing the likelihood that the user will again achieve the desired outcome.

In one exemplary embodiment, a plurality of such profiles (i.e., sets of selected weld parameters and/or weld conditions) are saved, i.e., as pre-sets, such that the profiles can be accessed by a user beginning a welding process. In one exemplary embodiment, a plurality of pre-sets are presented to a user along with a weld score corresponding to each pre-set. Each weld score quantifies an overall quality of a weld previously obtained using the weld parameters and weld conditions associated with the pre-set. As noted above, these weld scores are based on weighted, statistical measurements that more accurately reflect weld quality as compared to a mere visual inspection of the weld. The user can then select one of the pre-sets for performing the welding process, thereby increasing the likelihood that the user will achieve the same or a substantially similar weld as that previously produced using the weld parameters and weld conditions associated with the pre-set. In one exemplary embodiment, a user interface is provided to allow the user to filter out pre-sets that do not match criteria input by the user, for example, filtering out those pre-sets that have an associated weld score below an input threshold.

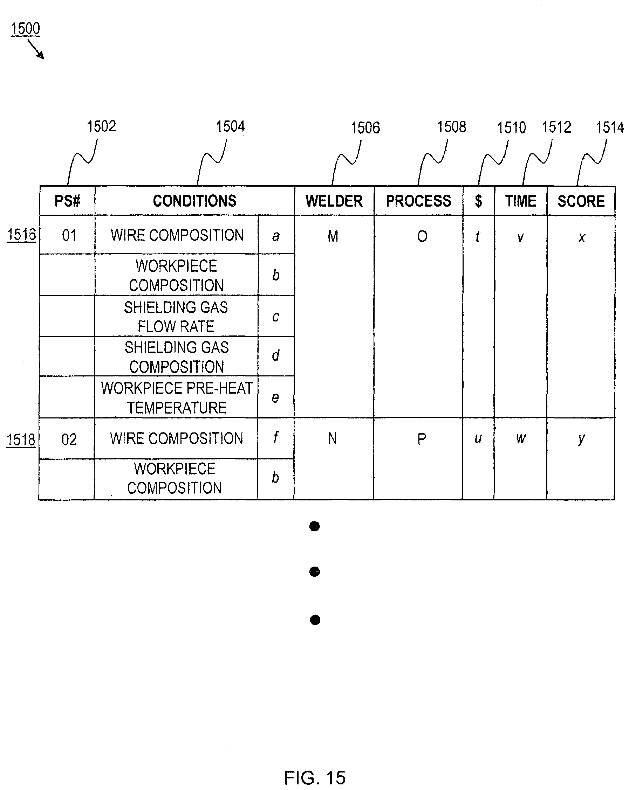

FIG. 15 shows pre-sets **1500**, according to one exemplary embodiment. Each of the pre-sets **1500** includes an identifying pre-set number **1502**, a set of weld conditions **1504**, welder information **1506**, welding process information **1508**, a monetary cost **1510**, a time cost **1512,** and an associated weld score **1514.** A first pre-set **1516**, having pre-set number 01, is associated with weld conditions 1504 having values a, b, c, d, and e and a welder M. The first pre-set **1516** corresponds to a welding process O. If a user selects the first pre-set **1516** (i.e., pre-set 01) for performing the welding process O with the welder M under the welding conditions a, b, c, d, and e, the user can expect a weld resulting from the welding process O to have a monetary cost of approximately t, a time cost of approximately v, and a weld score of approximately x. The pre-sets **1500** can include additional pre-sets, such as a second pre-set **1518,** associated with different combinations of weld conditions **1504**, welders **1506**, and/or welding processes **1508.**

In addition to the monitored weld parameters already described herein, additional weld parameters may be monitored for one or more states of a wave shape, and additional quality parameters may be calculated therefrom to more accurately detect and identify weld defects. Additional weld parameters may include a welding torch or gun position, a level of sound produced by the arc welding process, at least one frequency of sound produced by the arc welding process, and a pulsing rate of sound produced by the arc welding process. More additional welding parameters include a level of visible light produced by the arc welding process, at least one frequency of visible light produced by the arc welding process, and a pulsing rate of visible light produced by the arc welding process. Further additional welding parameters include a level of infrared light produced by the arc welding process, at least one frequency of infrared light produced by the arc welding process, a pulsing rate of infrared light produced by the arc welding process, and a wire feed motor current level.

In accordance with an embodiment, the additional weld parameters are sensed by sensors or monitoring devices that are appropriate for detecting such weld parameters. For example, sound may be sensed by a microphone, visible light may be sensed by a photodetector, infrared light may be sensed by an infrared detector, wire feed motor current may be sensed by a current shunt. Torch position may be sensed using one or more types of sensing technologies including, for example, imaging sensors or magnetic sensors. The sensors may be located in various places including, for example, on a welding torch, on a welding helmet, or in the general welding area. The additionally sensed weld parameters may be input to and processed by the monitor M, in a manner similar to how the other weld parameters are input and processed as described previously herein. Other weld parameters that may be monitored an processed include a temperature of the workpiece, a level of a shielding gas, a composition of a shielding gas, a wind speed near the workpiece, a humidity level near the workpiece, and an operator position.

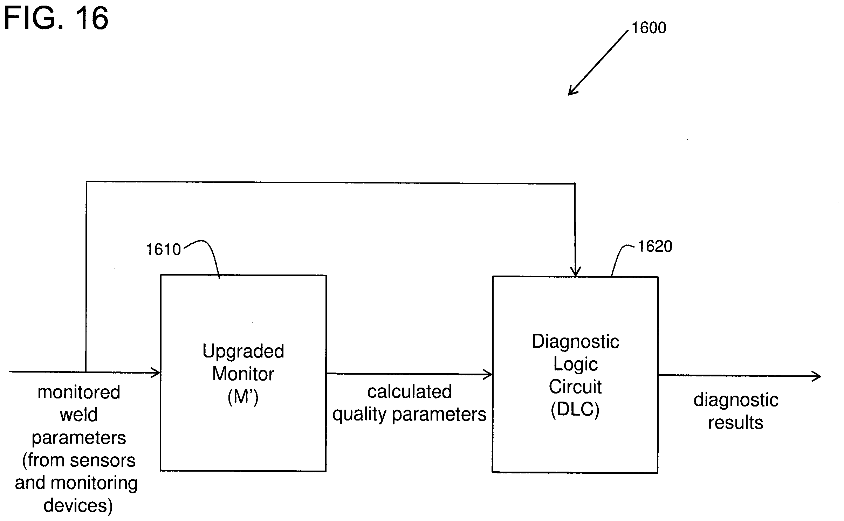

The monitor M may be configured (e.g., as upgraded monitor M' shown in FIG. 16) to calculate a plurality of quality parameter statistics based on the additionally monitored weld parameters. The various quality parameter statistics of "average", "standard deviation", "variance average", and "variance standard deviation" may be calculated for the various additional weld parameters for one or more states of a wave shape in a manner similar to how those quality parameter statistics are calculated for voltage and current as described previously herein. That is, quality parameters based on the additional monitored weld parameters may be calculated in a manner similar to how QVA, QVSD, QWA, and QVVSD are calculated for monitored voltage, and how QIA, QISD, QIVA, and QIVSD are calculated for monitored current.

For example, the monitor M may be configured to calculate sound level quality parameters during the welding process for one or more states over a period of time such as a quality sound level average (QSLA), a quality sound level standard deviation (QSLSD), a quality sound level variance average (QSLVA), and a quality sound level variance standard deviation (QSLVSD). The monitor M may also be configured to calculate sound frequency quality parameters for one or more states over a period of time such as a quality sound frequency average (QSFA), a quality sound frequency standard deviation (QSFSD), a quality sound frequency variance average (QSFVA), and a quality sound frequency variance standard deviation (QSFVSD). Furthermore, the monitor M may also be configured to calculate sound pulse rate quality parameters for one or more states over a period of time such as a quality sound pulse rate average (QSPRA), a quality sound pulse rate standard deviation (QSPRSD), a quality sound pulse rate variance average (QSPRVA), and a quality sound pulse rate variance standard deviation (QSPRVSD). The sound of the welding process is produced by the arc between the wire electrode and the workpiece. Specific sound characteristics tend to occur during specific states of the welding wave shape.

The monitor M may be configured to calculate visible light level quality parameters during the welding process for one or more states over a period of time such as a quality visible light level average (QVLLA), a quality visible light level standard deviation (QVLLSD), a quality visible light level variance average (QVLLVA), and a quality visible light level variance standard deviation (QVLLVSD). The monitor M may also be configured to calculate visible light frequency quality parameters for one or more states over a period of time such as a quality visible light frequency average (QVLFA), a quality visible light frequency standard deviation (QVLFSD), a quality visible light frequency variance average (QVLFVA), and a quality visible light frequency variance standard deviation (QVLFVSD). Furthermore, the monitor M may also be configured to calculate visible light pulse rate quality parameters for one or more states over a period of time such as a quality visible light pulse rate average (QVLPRA), a quality visible light pulse rate standard deviation (QVLPRSD), a quality visible light pulse rate variance average (QVLPRVA), and a quality visible light pulse rate variance standard deviation (QVLPRVSD). The visible light of the welding process is produced by the arc between the wire electrode and the workpiece.

The monitor M may be configured to calculate infrared light level quality parameters during the welding process for one or more states over a period of time such as a quality infrared light level average (QIRLLA), a quality infrared light level standard deviation (QIRLLSD), a quality infrared light level variance average (QIRLLVA), and a quality infrared light level variance standard deviation (QIRLLVSD). The monitor M may also be configured to calculate infrared light frequency quality parameters for one or more states over a period of time such as a quality infrared light frequency average (QIRLFA), a quality infrared light frequency standard deviation (QIRLFSD), a quality infrared light frequency variance average (QIRLFVA), and a quality infrared light frequency variance standard deviation (QIRLFVSD). Furthermore, the monitor M may also be configured to calculate infrared light pulse rate quality parameters for one or more states over a period of time such as a quality infrared light pulse rate average (QIRLPRA), a quality infrared light pulse rate standard deviation (QIRLPRSD), a quality infrared light pulse rate variance average (QIRLPRVA), and a quality infrared light pulse rate variance standard deviation (QIRLPRVSD). The infrared light of the welding process is produced by the arc between the wire electrode and the workpiece.

The monitor M may be configured to calculate wire feed motor current quality parameters during the welding process for one or more states over a period of time such as a quality wire feed motor current average (QWFMIA), a quality wire feed motor current standard deviation (QWFMISD), a quality wire feed motor current variance average (QWFMIVA), and a quality wire feed motor current variance standard deviation (QWFMIVSD). The wire feed motor current is produced by the motor of the wire feeder during the welding process. When a contact tip becomes worn, or a wrong contact tip is being used, shifts or spikes in the motor current may be observed during certain states.

Again the various quality parameter statistics of "average", "standard deviation", "variance average", and "variance standard deviation" may be calculated for the various additional weld parameters in a manner similar to how those quality parameter statistics are calculated for voltage and current as described previously herein. Furthermore, in accordance with an embodiment, a value of each of the calculated quality parameters for each period of time may be compared to a corresponding expected quality parameter value to determine if a difference between the calculated quality parameter value and the expected quality parameter value exceeds a predetermined threshold. If the difference exceeds the threshold, the calculated quality parameter value may be weighted with a magnitude weight based on the difference, and/or weighted with a time contribution weight based on a time contribution of its state to the wave shape including the state.

In accordance with an embodiment of the present invention, the quality parameters (weighted or unweighted) and/or the weld parameters may be used to diagnose the arc welding process. FIG. 16 illustrates a schematic block diagram of an embodiment of a system **1600** for diagnosing an arc welding process. The system **1600** corresponds to a portion of an arc welding system and includes an upgraded monitor M' **1610** which is similar to the monitor M but is configured to further monitor the additional weld parameters discussed herein and further calculate the corresponding additional quality parameters. The system **1600** also includes a diagnostic logic circuit (DLC) **1620** in operative communication with the upgraded monitor M' 1610.

As illustrated in FIG. 16, the calculated quality parameters and/or the monitored weld parameters, or some subset thereof, is passed to the DLC **1620** which operates on the parameters to generate diagnostic results. In accordance with an embodiment, the DLC **1620** first identifies localized or continuous defects of the weld by analyzing the quality parameters. A localized defect is a defect that occurs over a relatively short period of time during the welding process (e.g., 2 seconds). A continuous defect is a defect that occurs over essentially the entire time of the welding process (e.g., 20 seconds). Some examples of defects include gas inclusions in the weld (e.g., porosity, blow holes, worm holes), burnthrough of the workpiece, lack of penetration into the workpiece, splatter, an underfilled joint, undercut, cracking of the weld, voids in the weld, and lack of fusion. Such types of defects are well known in the art. Other types of defects may be possible as well.

Some examples of possible causes of defects include a lack of shielding gas, a short contact tip to work distance, a long contact tip to work distance, a clogged nozzle, workpiece surface contamination, too slow a travel speed, too fast a travel speed, too slow a wire feed speed, too fast a wire feed speed, sulfur content in the workpiece or electrode, excessive moisture from the electrode or workpiece, and too small of an electrode angle. Other types of causes of defects are possible as well.

During training weld procedures, defects are correlated to causes of the defects and the DLC **1620** is programmed accordingly to properly associate defects with one or more possible causes. Therefore, during a normal (non-training) welding procedure, the DLC **1620** is able to suggest one or more possible causes of one or more detected defects. The defects and the one or more causes may be reported to the operator, allowing the operator to correct the problem. The DLC **1620** may be programmed as a decision tree, for example, to isolate to a cause of a defect.

As an example, the system **1600** may detect porosity, occurring in certain states, and splatter, occurring in certain other states, as two continuous defects occurring during a welding process by analyzing the quality parameters. The DLC **1620** may correlate the occurrence of the two continuous defects in the respective states to a lack of shielding gas throughout the welding process. The operator may subsequently find that the valve of the gas tank was turned off during the welding process.

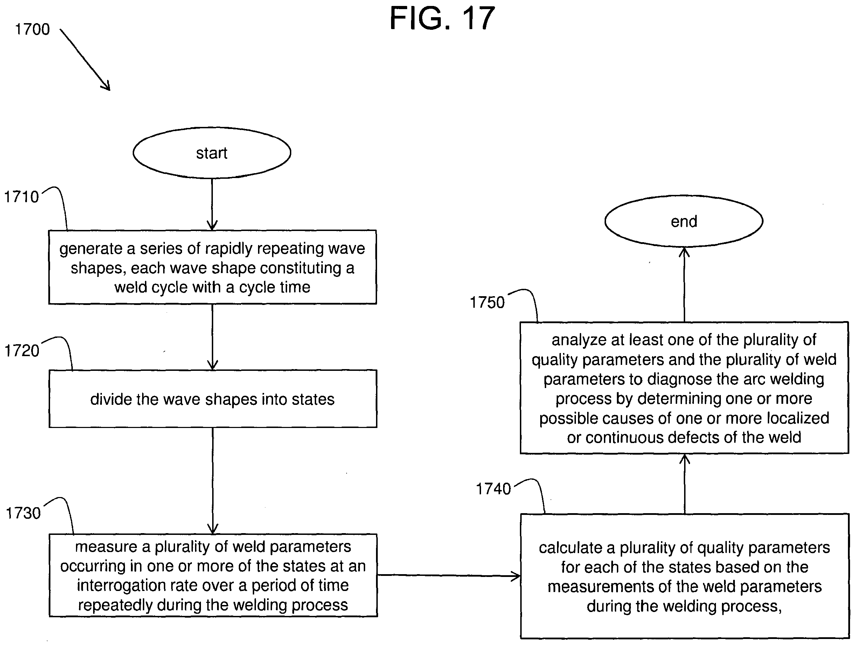

FIG. 17 is a flowchart of a method **1700** of diagnosing an arc welding process using the system **1600** of FIG. 16 by monitoring an electric arc welder as the welder performs the arc welding process by creating actual welding parameters between an advancing wire and a workpiece to create a weld. The welding process is controlled by command signals to a power supply of the welder. In step **1710** of the method **1700**, a series of rapidly repeating wave shapes is generated, each wave shape constituting a weld cycle with a cycle time. In step **1720**, the wave shapes are divided into states. In step **1730**, a plurality of weld parameters occurring in one or more of the states are measured at an interrogation rate over a period of time repeatedly during the welding process.

In step **1740** of the method **1700**, a plurality of quality parameters are calculated for each of the states based on the measurements of the weld parameters during the welding process. In step **1750**, at least one of the plurality of quality parameters and the plurality of weld parameters are analyzed to diagnose the arc welding process by determining one or more possible causes of one or more localized or continuous defects of the weld.

In summary, an arc welding system and methods are disclosed. The system is capable of monitoring variables during a welding process, according to wave shape states, and weighting the variables accordingly, detecting defects of a weld, diagnosing possible causes of the defects, quantifying overall quality of a weld, obtaining and using data indicative of a good weld, improving production and quality control for an automated welding process, teaching proper welding techniques, identifying cost savings for a welding process, and deriving optimal welding settings to be used as pre-sets for different welding processes or applications.

In the foregoing embodiments, weld parameters are measured or monitored during a welding process to quantify a weld quality. The weld parameters are input to the monitor M (or upgraded monitor M'), which outputs one or more quality parameters, one or more quality indicators (e.g., weld scores), or an accept/reject indicator as described above. It is to be appreciated that the monitor M (or more specifically the circuit, logic, software, etc implementing the monitor) can perform the single task of outputting the one or more quality parameters while other, related, and connected circuits or software can generate quality indicators or accept/reject indicators. These separate functional elements, which can be implemented as circuits, logical elements, software executing on a computer processor, etc., are combinable into larger functional blocks and/or systems. Accordingly, the descriptions of such functional aspects are organized herein for convenience and it is to be appreciated that any combination of such aspects in physical systems are intended to be within the scope of the claimed subject matter.

The quality parameters generated from monitoring a baseline or training welding process can be utilized to evaluate other welding processes. These quality parameters can form the basis of baseline quality indicators, thresholds, or other metrics used to evaluate other welds, as described above. Whether for a training weld or an evaluation weld (i.e., a weld to be measured against the training weld), a welder performs a welding process by creating welding parameters between an advancing wire and a workpiece. The welding process is controlled with command signals to a power supply of the welder, a motor driving the wire feed, etc. For example, the command signals can be transmitted by wave shape generator 40 from FIG. 1 or a controller of the welder, such as controller **1810** described below.. The welding parameters are generated according to a waveform, which can include a series of repeating wave shapes, each of which constitutes a weld cycle with a cycle time. Each wave shape can be segmented into states, which as described above, can be monitored independently or collectively to determine quality parameters for individual states, complete weld cycles, or the entire welding process (i.e., the series of repeating wave shapes). The quality parameters of a monitored welding process can be compared to reference or trained quality parameters to evaluate an overall quality of a weld as acceptable or unacceptable. For instance, in one aspect, the trained quality parameters can indicate minimum thresholds to qualify as an acceptable weld. It is to be appreciated that such monitoring and evaluation can occur at the various levels described above. That is, monitoring and evaluation can be performed on a granular level (i.e., over a sampling period), over one state of one wave shape, over the entire wave shape, or over the entire series of wave shapes (e.g., welding process).

In forgoing embodiments, such comparisons are utilized with welding processes generally performed under substantially similar welding conditions as the training weld. Welding conditions such as, but not limited to, contact tip-to-work distance, weld gap, and weld speed (i.e. transit speed) can vary between from welding process to welding process and, further, can vary between successive runs of the same welding process. In addition, the varying welding conditions can affect generated welding parameters. For instance, an arc welder generates a waveform, in the form of command signals for example, to control a power supply of the welder. The waveform is generally configured to regulate a constant output voltage between the wire and the workpiece. However, in response to varying welding conditions, a controller of the welder can alter the waveform to adjust. According to one example, the controller adjusts the waveform (i.e., the command signals) to maintain a constant output voltage.

Varying and differing welding conditions, and subsequent changes implemented by the controller, affect welding parameters generated between the wire and workpiece. Accordingly, when monitoring the welding parameters and determining corresponding quality parameters, noise is introduced both in the welding parameters and in subsequently determined quality parameters and indicators. Such noise impacts reliability of quality indicators and comparisons with training welds performed under different welding conditions.

## DETAILED DESCRIPTION OF THE INVENTION

According to an aspect, non-adaptive portions or states of the waveform can be leveraged to improve monitor performance. That is, welding parameters can be effectively monitored and weld quality can be determined even for welding processes performed in welding conditions differing from the trained conditions or performed under varying welding conditions. Non-adaptive portions of the waveform refer to portions, states, or segments of the waveform for which the command signals do not change with differences in welding conditions. That is, despite different or varying welding conditions, the controller of the welder does not alter the command signal issued to the power supply of the welder the in non-adaptive segments. According to a further example, the non-adaptive segment can refer to portions of the welding process in which adaptive control is not performed. Here, adaptive control refers to the characteristic of the controller to change the waveform to regulate the constant output voltage in response to varying conditions.

In accordance with an embodiment, non-adaptive segments or states of the wave shape are selected for monitoring. Accordingly, variations in welding parameters due to controller adaptations are not encountered. According to another embodiment, non-adaptive segments are evaluated to determine differences in welding conditions between normal (non-training) welding processes and training welding processes. The resultant effects on monitored welding parameters and/or quality parameters can be identified and utilized to remove noise in the model of the welding process. Accordingly, the normal welding processes can be evaluated against the training welding processes despite different welding conditions.

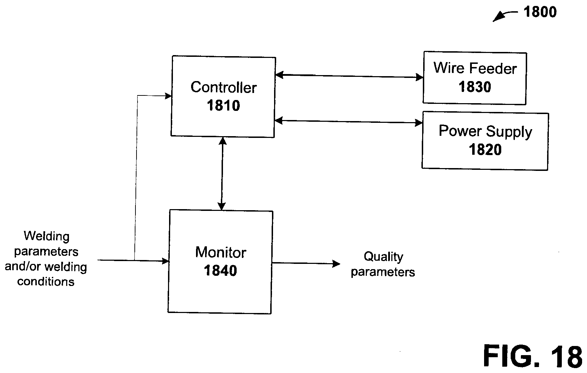

FIG. 18 illustrates a schematic block diagram of a system **1800** for adjusting welding process monitoring and evaluation in response to different or varying welding conditions. The system **1800** corresponds to a portion of an arc welding system that includes a controller **1810** and a power supply **1820**, and a wire feeder **1830**. The system **1800** further includes an monitor **1840** that determines quality parameters based on welding parameters.

Controller **1810** implements a welding process by controller the power supply **1820** and the wire feeder **1830**. Controller **1810** generates a waveform and issues command signals, in accordance with the waveform, to the power supply **1820** and the wire feeder **1830**. The power supply **1820** and the wire feeder **1830** convert the command signals into suitable outputs to enact the welding process. Moreover, controller **1810** can be configured to provide adaptive control of the welding process. That is, the controller **1810** adjusts the waveform, and accordingly the command signals, in response to welding conditions. Some welding conditions can be measured or sensed directly, with sensors for example, as discussed above. Other differences or changes in welding conditions are indirectly identified by, for example, detecting changes in measured welding parameters (e.g., output voltage, etc.). As shown in FIG. 18, the welding parameters and/or welding conditions monitored, sensed, or measured as described in previous embodiment are input to the controller **1810** to enable adaptive control.

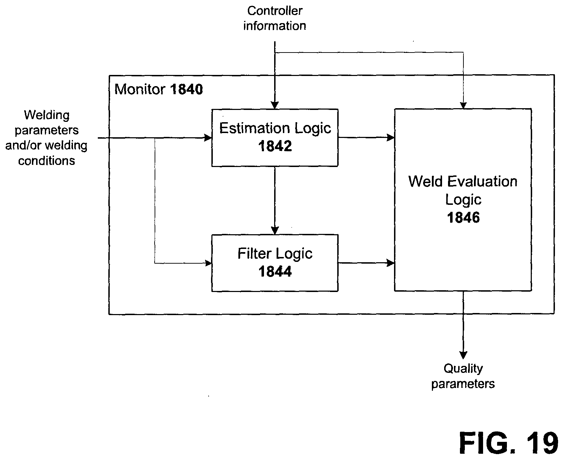

To facilitate determination of quality parameters, monitor **1840** communicates with controller **1810** to ascertain a current portion or state of the generated waveform, to acquire command signals output by controller **1810**, and, in the case of adaptive control, to identify when adaptive control is being applied and to what extent. For instance, to facilitate operation of the monitor **1840**, the controller **1810** can temporarily disable adaptive control to remove the effects of such control in the welding parameters measured by the monitor **1840**. Turning to FIG. 19, a schematic block diagram of an exemplary, non-limiting embodiment for monitor **1840** is illustrated. As depicted, monitor **1840** includes estimation logic **1842** configured to identify an effect of different or varying welding conditions, under which a welding process is performed, on monitored welding parameters or sensed welding conditions. In an example, estimation logic **1842** outputs noise parameters or a noise signal representing the effect of changing conditions on welding parameters. For instance, estimation logic **1842** can obtain, as input, controller information from controller **1810**. The controller information can include, but is not limited to, command signals, waveform states or segments, signals indicative of adaptive changes implemented by the controller **1810**, a signal indicative that the controller **1810** is outputting a non-adaptive portion of the waveform, and/or a signal enabling/disabling adaptive control. Non-adaptive portions of the waveform can include peak current segments or background current frequency segments. However, it is to be appreciated that other states or portions can be made or designated as non-adaptive segments.

During a non-adaptive segment of the waveform, estimation logic **1842** can identify deviations, changes, or fluctuations in welding parameters monitored as described previously. In one example, the estimation logic **1842** can utilize techniques similar to those employed by level monitor stage **81** and/or stability monitor stage **91** (described above) to identify differences between a measured welding parameter and a command signal. Alternatively, the estimation logic **1842** can compare welding parameters monitored over the non-adaptive segment against welding parameters recorded for a corresponding segment of a training welding process. Further, in both examples, the estimation logic **1842** can utilize welding conditions sensed, as described in previous embodiments, to determine whether the normal welding process is being performed under different welding conditions from the training welding process. Based on this determination, the estimation logic **1842** can generate a model of the effect of the differing welding conditions on the monitored welding parameters. This model, in turn, be utilized by the estimation logic **1842** to output the noise parameters or noise signal. According to another example, the estimation logic **1842** can output the noise parameters or noise signal based on the identified deviations between the measured welding parameters and the command signals. In other words, once determined that the welding process is performed under different conditions than the training weld, the estimation logic **1842** can attribute such deviations in the welding parameters to those changed conditions and, thus, generate the noise parameters representing the magnitude of the deviations and/or the noise signal as a difference signal between the measured parameters and the command signals.

It is to be appreciated that the estimation logic **1842** can construct or model noise parameters or signals individually for each welding parameter that is monitored. Accordingly, each welding parameter can be adjusted separately in order to monitor and evaluate welding processes despite changing welding conditions. In one aspect, as shown in FIG. 19, monitor **1840** can include filter logic **1844** configured to adjust welding parameters monitored in accordance with the noise parameters or signals provided by the estimation logic **1842**. The welding parameters adjusted by filter logic **1844** can be associated with any monitored portion or segment of the waveform, whether adaptive or non-adaptive. Further to this aspect, the filter logic **1844** outputs adjusted or scrubbed welding parameters that account for changed welding conditions which can be substantially overcome with utilization of adaptive control. Accordingly, the adjusted welding parameters facilitate determination of weld quality using techniques described above, since deviations in welding parameters, due to varying conditions and/or adaptive control, are isolated. For instance, the adjusted welding parameters can be input to weld evaluation logic **1846**, which can be substantially similar to monitor M or monitor M' described previously. That is, the weld evaluation logic **1846** can monitor or measure the adjusted welding parameters and calculate corresponding quality parameters and/or quality indicators. Moreover, the weld evaluation logic **1846** can compare calculated quality parameters and/or quality indicators with training data.

According to another aspect, the estimation logic **1842** can generate an adaptation model based on the noise parameters and knowledge of the adaptability algorithms employed by controller **1810**. The adaptation model can be utilized to render appropriate adjustments to monitoring welding parameters. For instance, thresholds or other characteristics of weld evaluation logic **1846**, utilized to monitor parameters and calculate quality metrics as described above, can be configured based on the adaptation model to account for welding parameter values altered because of adaptive control.

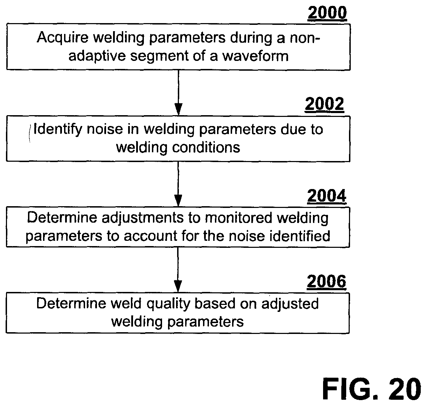

FIG. 20 illustrates a flowchart of a method for determining a quality of a weld by monitoring a welder as the welder performs a welding process by creating actual welding parameters between an advancing wire and a workpiece. The method depicted in FIG. 20 can be performed by system **1800**, for example. At step **2000**, welding parameters are acquired (i.e., monitored or measured) during a non-adaptive segment of a waveform. At step **2002**, noise in the welding parameters due to different welding conditions is identified. At step **2004**, adjustments to measured welding parameters or how welding parameters are measured are determined to account for the noise identified. For example, measured welding parameters from adaptive and non-adaptive portions of the waveform are filtered to remove the noise. In another example, the metrics used to measure welding parameters from adaptive and non-adaptive portions of the waveform are configured to account for command signals adaptively applied for changing welding conditions. At step **2006**, weld quality is determined based on adjusted welding parameters.

In summary, an arc welding system and methods are disclosed. For example, in one embodiment, a method of determining a quality of a weld by monitoring a welder as the welder performs a welding process by creating actual welding parameters between an advancing wire and a workpiece is provided. The welding process is defined by a series of rapidly repeating wave shapes controlled by command signals to a power supply of the welder. The method includes segmenting a wave shape, having a weld cycle with a cycle time, into a series of time-segmented states. The method also includes selecting a non-adaptive state from the series of time-segmented states. The non-adaptive state represents a segment of the wave shape where the command signals remain invariable under different weld conditions. The method further include measuring a plurality of weld parameters generated between the advancing wire and the workpiece during the non-adaptive state at an interrogation rate over an interval of time. In addition, the method includes calculating a plurality of quality parameters for the non-adaptive state based on measurements of the plurality of weld parameters acquired during the interval of time within the non-adaptive state.

According to an example, the method can further include measuring the plurality of weld parameters occurring in the non-adaptive state repeatedly at the interrogation rate for a plurality of intervals of time; and repeatedly calculating the plurality of quality parameters for respective measurements acquired for the plurality of intervals of time.

According to another example, for a quality parameter of the plurality of quality parameters, the method can include comparing a value of each of the quality parameter calculated for the interval of time to a corresponding expected quality parameter value to determine if a difference between the value of the quality parameter calculated and the expected quality parameter value exceeds a predetermined threshold. When the difference exceeds the predetermined threshold, the method can include weighting the value of the quality parameter calculated with a magnitude weight based on the difference, and weighting the value of the quality parameter calculated with a time contribution weight based on a time contribution of the interval of time to the wave shape including the interval of time. The method can also include calculating a quality indicator for the interval of time based on weighted values of the quality parameters. Further still, the method can include aggregating a plurality of quality indicators respectively associated with a plurality of intervals of time; and calculating an overall quality indicator for the welding process based on the plurality of quality indicators aggregated.

According to another aspect, the method can include utilizing the plurality of quality parameters calculated for the non-adaptive state as training data to evaluate subsequent welding processes.

According to yet another aspect, the method can include monitoring values for the command signals during the non-adaptive state at the interrogation rate repeatedly over a plurality of intervals of time. Further to this aspect, the method includes calculating noise parameters based, at least in part, on differences between the values of the command signals monitored and the measurements of the plurality of weld parameters acquired during the plurality of intervals of time.

In addition, the method can include measuring the plurality of weld parameters generated between the advancing wire and the workpiece during one or more adaptive states from the series of time-segmented states; and adjusting the plurality of weld parameters measured in the one or more adaptive states based on the noise parameters calculated based on the non-adaptive state. Further, the method can include calculating the plurality of quality parameters for the one or more adaptive states based on adjusted measurements of the plurality of weld parameters acquired during the one or more adaptive states.

Alternatively, the method can include calculating an adaptation model based on the noise parameters, wherein the adaptation model represents changes to command signals by an adaptive controller of the welder to account for weld conditions. Further to this example, the method can include measuring the plurality of weld parameters generated between the advancing wire and the workpiece during one or more adaptive states from the series of time-segmented states; and adjusting the plurality of weld parameters measured in the one or more adaptive states based on the adaptation model.

According to another example, a system for determining a quality of a weld by monitoring a welder as the welder performs a welding process by creating actual welding parameters between an advancing wire and a workpiece. The welding process being defined by a series of rapidly repeating wave shapes controlled by command signals to a power

EP 3 218 133 B1

supply of the welder. The system includes a logic state controller for segmenting a wave shape, having a weld cycle with a cycle time, into a series of time-segmented states. The system further includes a selection circuit for selecting a non-adaptive state from the series of time-segmented states. The non-adaptive state represents a segment of the wave shape where the command signals remain invariable under different weld conditions. The system also includes a monitor circuit configured to measure a plurality of weld parameters generated between the advancing wire and the workpiece during the non-adaptive state at an interrogation rate over an interval of time. In addition, the system includes a circuit for calculating a plurality of quality parameters for the non-adaptive state based on measurements of the plurality of weld parameters acquired during the interval of time within the non-adaptive state.

In an aspect, the monitor circuit is further configured to measure the plurality of weld parameters occurring in the non-adaptive state repeatedly at the interrogation rate for a plurality of intervals of time, and the circuit for calculating the plurality of quality parameters is further configured to repeatedly calculate the plurality of quality parameters for respective measurements acquired for the plurality of intervals of time.

According to another aspect, for a quality parameter of the plurality of quality parameters, the system further includes a circuit for comparing a value of each of the quality parameter calculated for the interval of time to a corresponding expected quality parameter value to determine if a difference between the value of the quality parameter calculated and the expected quality parameter value exceeds a predetermined threshold; a circuit for weighting the value of the quality parameter calculated with a magnitude weight based on the difference; and a circuit for weighting the value of the quality parameter calculated with a time contribution weight based on a time contribution of the interval of time to the wave shape including the interval of time.

In yet another aspect, the system includes an estimation circuit for monitoring values of the command signals during the non-adaptive state at the interrogation rate repeatedly over a plurality of intervals of time, and for calculating noise parameters based, at least in part, on differences between the values of the command signals monitored and the measurements of the plurality of weld parameters acquired during the plurality of intervals of time. Further to this aspect, the monitor circuit is further configured to measure the plurality of weld parameters generated between the advancing wire and the workpiece during one or more adaptive states from the series of time-segmented states and the system can also include a filter circuit for adjusting the plurality of weld parameters measured in the one or more adaptive states based on the noise parameters calculated based on the non-adaptive state. The circuit for calculating the plurality of quality parameters is further configured to calculate the plurality of quality parameters for the one or more adaptive states based on adjusted measurements of the plurality of weld parameters acquired during the one or more adaptive states.

Alternatively, the system can include a circuit for calculating an adaptation model based on the noise parameters, wherein the adaptation model represents changes to command signals by an adaptive controller of the welder to account for weld conditions. Further to this aspect, the monitor circuit is further configured to measure the plurality of weld parameters generated between the advancing wire and the workpiece during one or more adaptive states from the series of time-segmented states, and adjust the plurality of weld parameters measured in the one or more adaptive states based on the adaptation model.

The above description of specific embodiments has been given by way of example. From the disclosure given, those skilled in the art will not only understand the general inventive concepts and attendant advantages, but will also find apparent various changes and modifications to the structures and methods disclosed. For example, the general inventive concepts are not typically limited to one of a manual welding process or an automated (e.g., robotic) welding process but instead are readily adaptable to either. Furthermore, the general inventive concepts are readily adaptable to different welding processes and techniques (e.g., all variations of arc welding such as Stick and TIG welding). It is sought, therefore, to cover all such changes and modifications as fall within the scope of the appended claims.

REFERNCE NUMBERS

| 10 | welder | 42 | line |
| 12 | power supply | 44 | line |
| 14 | terminal | 46 | wire drive control |
| 16 | terminal | 46a | line |
| 18 | smoothing inductor | 46b | line |
| 20 | welding wire | 46c | encoder |
| 22 | reel | 70 | command interface |
| 24 | feeder / rolls | 80c | filter |
| 26 | motor | 80d | filter |
| 30 | workpiece | 81 | stage |
| 32 | shunt | 81a | stage |
| 34 | block | 81b | stage |

28

(continued)

| | | | |
|---|---|---|---|
| 34a | line | 82 | report memory logic |
| 36 | block | 84 | oscillator |
| 36a | line | 90a | filter |
| 40 | wave shape generator | 91 | stage |
| 94 | oscillator | 236 | block |
| 100 | pulse wave shape | 238 | block |
| 102 | peak current | 250 | program |
| 104 | background current | 252 | program step |
| 110 | dashed line | 254 | counter / block |
| 152 | block | 254a | line |
| 156 | line / output | 256 | counter |
| 158 | modulator | 258 | line |
| 160 | block | 260 | block |
| 162 | line | 262 | subroutine |
| 170 | ramp up portion | 262a | block |
| 172 | ramp down portion | 264 | program step |
| 180 | threshold | 266 | program routine |
| 182 | threshould | 266a | block |
| 184 | transient / excursion | 266b | weld reject signal |
| 186 | transient / excursion | 270 | program |
| 200 | programm | 272 | counter |
| 202a | line | 280 | subroutine |
| 202b | line | 282 | block |
| 210 | block | 282a | block |
| 210a | line | 284 | block |
| 212 | routine | 286 | block |
| 214 | line | 286a | block |
| 216 | line | 286b | block |
| 220 | counter | 900 | method |
| 220a | block | 902 | step |
| 222 | counter | 904 | step |
| 222a | block | 906 | step |
| 224 | line | 908 | step |
| 226 | block | 910 | step |
| 230 | block | 914 | step |
| 234 | stage | 916 | step |
| 918 | step | 1216 | booth |
| 920 | step | 1218 | booth |
| 1000 | production line | 1220 | first welder W1 |
| 1002 | first weld score S1 | 1222 | second welder W2 |
| 1004 | second weld score S2 | 1224 | third welder W3 |
| 1006 | third weld score S3 | 1226 | fourth welder W4 |
| 1008 | first workpiece WP1 | 1228 | fifth welder W5 |
| 1010 | second workpiece WP2 | 1230 | sixth welder W6 |
| 1012 | third workpiece WP3 | 1232 | seventh welder W7 |
| 1014 | welding station | 1234 | eighth welder W8 |
| 1016 | monitor M | 1236 | first student S1 |
| 1018 | evaluation station | 1238 | second student S2 |
| 1020 | weld command | 1240 | third student S3 |
| 1022 | weld command | 1242 | fourth student S4 |
| 1100 | method | 1244 | fifth student S5 |

(continued)

| | | | |
|---|---|---|---|
| 1102 | step | 1246 | sixth student S6 |
| 1104 | step | 1248 | seventh student S7 |
| 1106 | step | 1250 | eighth student S8 |
| 1108 | step | 1252 | instructor |
| 1110 | step | 1254 | production monitoring system |
| 1112 | step | (PMS) | |
| 1114 | step | 1256 | network |
| 1116 | step | 1258 | display device |
| 1118 | step | 1260 | data store |
| 1200 | system | 1300 | method |
| 1202 | instruction | 1302 | step |
| 1204 | booth | 1304 | step |
| 1206 | booth | 1306 | step |
| 1208 | booth | 1308 | step |
| 1210 | booth | 1310 | step |
| 1212 | booth | 1402 | weld condition |
| 1214 | booth | 1404 | wire composition |
| 1406 | workpiece composition | 1842 | estimation logic |
| 1408 | shielding gas flow rate | 1844 | filter logic |
| 1410 | shielding gas composition | 1846 | evaluation logic |
| 1412 | tem perature | 2000 | step |
| 1414 | weld condition | 2002 | step |
| 1416 | weld score | 2004 | step |
| 1418 | monetary cost | 2006 | step |
| 1420 | time cost | N | number |
| 1500 | pre-set | M' | monitor |
| 1502 | pre-set number | S1 | first weld score / first student |
| 1504 | weld condition | S2 | second welder score / second student |
| 1506 | welder confirmation | | |
| 1508 | welding process information | S3 | third weld score / third student |
| 1510 | monetary cost | S4 | fourth student |
| 1512 | time cost | S5 | fifth student |
| 1514 | weld score | S6 | sixth student |
| 1516 | first pre-set | S7 | seventh student |
| 1518 | second pre-set | S8 | eighth student |
| 1600 | system | W1 | first welder |
| 1610 | monitor M' | W2 | second welder |
| 1620 | diagnostic logic circuit (DLC) | W3 | third welder |
| 1700 | method | W4 | fourth welder |
| 1710 | step | W5 | fifth welder |
| 1720 | step | W6 | sixth welder |
| 1730 | step | W7 | seventh welder |
| 1740 | step | W8 | eighth welder |
| 1800 | system | WP1 | first workpiece |
| 1810 | controller | WP2 | second workpiece |
| 1820 | power supply | WP3 | third workpiece |
| 1830 | wire feeder | | |
| 1840 | monitor | | |

**Claims**

1. A method of determining a quality of a weld by monitoring a welder (10) as the welder (10) performs a welding process by creating actual welding parameters between an advancing wire (20) and a workpiece (30), the welding process being defined by a series of rapidly repeating wave shapes controlled by command signals to a power supply (12) of the welder (10), said method comprising:

   segmenting a wave shape, having a weld cycle with a cycle time, into a series of time-segmented states, **characterized in that** the method further comprises
   selecting a non-adaptive state from the series of time-segmented states, wherein the non-adaptive state represents a segment of the wave shape where the command signals remain invariable under different weld conditions;
   measuring a plurality of weld parameters generated between the advancing wire (20) and the workpiece (30) during the non-adaptive state at an interrogation rate over an interval of time; and
   calculating a plurality of quality parameters for the non-adaptive state based on measurements of the plurality of weld parameters acquired during the interval of time within the non-adaptive state.

2. The method of claim 1, **characterized in that** the method further comprises:

   measuring the plurality of weld parameters occurring in the non-adaptive state repeatedly at the interrogation rate for a plurality of intervals of time; and
   repeatedly calculating the plurality of quality parameters for respective measurements acquired for the plurality of intervals of time.

3. The method of claim 1 or 2, **characterized in that** the method further comprises, for a quality parameter of the plurality of quality parameters:

   comparing a value of each of the quality parameter calculated for the interval of time to a corresponding expected quality parameter value to determine if a difference between the value of the quality parameter calculated and the expected quality parameter value exceeds a predetermined threshold; and
   when the difference exceeds the predetermined threshold,

   weighting the value of the quality parameter calculated with a magnitude weight based on the difference, and
   weighting the value of the quality parameter calculated with a time contribution weight based on a time contribution of the interval of time to the wave shape including the interval of time.

4. The method of any of the claims 1 to 3, **characterized in that** the method further comprises calculating a quality indicator for the interval of time based on weighted values of the quality parameters, and/or
   aggregating a plurality of quality indicators respectively associated with a plurality of intervals of time; and/or
   calculating an overall quality indicator for the welding process based on the plurality of quality indicators aggregated.

5. The method of any of the claims 1 to 4, **characterized in that** the method further comprises utilizing the plurality of quality parameters calculated for the non-adaptive state as training data to evaluate subsequent welding processes, and/or monitoring values for the command signals during the non-adaptive state at the interrogation rate repeatedly over a plurality of intervals of time, and/or calculating noise parameters based, at least in part, on differences between the values of the command signals monitored and the measurements of the plurality of weld parameters acquired during the plurality of intervals of time.

6. The method of any of the claims 1 to 5, **characterized in that** the method further comprises:

   measuring the plurality of weld parameters generated between the advancing wire (20) and the workpiece (30) during one or more adaptive states from the series of time-segmented states; and
   adjusting the plurality of weld parameters measured in the one or more adaptive states based on the noise parameters calculated based on the non-adaptive state.

7. The method of any of the claims 1 to 6, **characterized in that** the method further comprises:
   calculating the plurality of quality parameters for the one or more adaptive states based on adjusted measurements of the plurality of weld parameters acquired during the one or more adaptive states, and/or calculating an adaptation model based on the noise parameters, wherein the adaptation model represents changes to command signals by an adaptive controller of the welder (10) to account for weld conditions.

8. The method of any of the claims 1 to 7, **characterized in that** the method further comprises:

   measuring the plurality of weld parameters generated between the advancing wire (20) and the workpiece (30) during one or more adaptive states from the series of time-segmented states; and
   adjusting the plurality of weld parameters measured in the one or more adaptive states based on the adaptation model.

9. A system for determining a quality of a weld by monitoring a welder (10) as the welder (10) performs a welding process by creating actual welding parameters between an advancing wire (20) and a workpiece (30), the welding process being defined by a series of rapidly repeating wave shapes controlled by command signals to a power supply (12) of the welder (10), the system comprising:

   a logic state controller for segmenting a wave shape, having a weld cycle with a cycle time, into a series of time-segmented states; **characterized in that** the system further comprises
   a selection circuit for selecting a non-adaptive state from the series of time-segmented states, wherein the non-adaptive state represents a segment of the wave shape where the command signals remain invariable under different weld conditions;
   a monitor circuit configured to measure a plurality of weld parameters generated between the advancing wire and the workpiece (30) during the non-adaptive state at an interrogation rate over an interval of time; and;
   a circuit for calculating a plurality of quality parameters for the non-adaptive state based on measurements of the plurality of weld parameters acquired during the interval of time within the non-adaptive state.

10. The system of claim 9, **characterized in that** the the monitor circuit is further configured to measure the plurality of weld parameters occurring in the non-adaptive state repeatedly at the interrogation rate for a plurality of intervals of time; and **in that** the circuit for calculating the plurality of quality parameters is further configured to repeatedly calculate the plurality of quality parameters for respective measurements acquired for the plurality of intervals of time.

11. The system of claim 9 or 10, **characterized in that** for a quality parameter of the plurality of quality parameters, the system further comprises:

   a circuit for comparing a value of each of the quality parameter calculated for the interval of time to a corresponding expected quality parameter value to determine if a difference between the value of the quality parameter calculated and the expected quality parameter value exceeds a predetermined threshold;
   a circuit for weighting the value of the quality parameter calculated with a magnitude weight based on the difference; and
   a circuit for weighting the value of the quality parameter calculated with a time contribution weight based on a time contribution of the interval of time to the wave shape including the interval of time.

12. The system of any of the claims 9 to 11, **characterized in that** the system further comprises an estimation circuit for monitoring values of the command signals during the non-adaptive state at the interrogation rate repeatedly over a plurality of intervals of time, and for calculating noise parameters based, at least in part, on differences between the values of the command signals monitored and the measurements of the plurality of weld parameters acquired during the plurality of intervals of time.

13. The system of any of the claims 9 to 12, **characterized in that** the monitor circuit is further configured to measure the plurality of weld parameters generated between the advancing wire (20) and the workpiece (30) during one or more adaptive states from the series of time-segmented states, and **in that** the system further comprises:
   a filter circuit for adjusting the plurality of weld parameters measured in the one or more adaptive states based on the noise parameters calculated based on the non-adaptive state.

14. The system of any of the claims 9 to 13, **characterized in that** the circuit for calculating the plurality of quality parameters is further configured to calculate the plurality of quality parameters for the one or more adaptive states based on adjusted measurements of the plurality of weld parameters acquired during the one or more adaptive states.

**15.** The system of any of the claims 9 to 14, **characterized in that** the system further comprises a circuit for calculating an adaptation model based on the noise parameters, wherein the adaptation model represents changes to command signals by an adaptive controller of the welder (10) to account for weld conditions.

**16.** The system of any of the claims 9 to 15, **characterized in that** the monitor circuit is further configured to measure the plurality of weld parameters generated between the advancing wire (20) and the workpiece (30) during one or more adaptive states from the series of time-segmented states, and adjust the plurality of weld parameters measured in the one or more adaptive states based on the adaptation model.

**Patentansprüche**

**1.** Verfahren zum Bestimmen einer Qualität einer Schweißung durch Überwachen eines Schweißgerätes (10), während das Schweißgerät (10) einen Schweißprozess ausführt, durch Erzeugen von Ist-Schweißparametern zwischen einem vorrückenden Draht (20) und einem Werkstück (30), wobei der Schweißprozess durch eine Reihe sich schnell wiederholender Wellenformen definiert wird, die durch Befehlssignale an eine Stromversorgung (12) des Schweißgerätes (10) gesteuert werden, wobei das Verfahren umfasst:
Segmentieren einer Wellenform, die einen Schweißzyklus mit einer Zykluszeit aufweist, zu einer Reihe zeitsegmentierter Zustände, **dadurch gekennzeichnet, dass** das Verfahren des Weiteren umfasst:

Auswählen eines nicht-adaptiven Zustands aus der Reihe zeitsegmentierter Zustände, wobei der nicht-adaptive Zustand ein Segment der Wellenform darstellt, in dem die - Befehlssignale unter verschiedenen Schweißbedingungen unveränderlich bleiben;
Messen mehrerer Schweißparameter, die zwischen dem vorrückenden Draht (20) und dem Werkstück (30) generiert werden, während des nicht-adaptiven Zustands mit einer Abfragerate über ein Zeitintervall; und
Berechnen mehrerer Qualitätsparameter für den nicht-adaptiven Zustand auf der Grundlage von Messungen der mehreren Schweißparameter, die während des Zeitintervalls innerhalb des nicht-adaptiven Zustands erfasst wurden.

**2.** Verfahren nach Anspruch 1, **dadurch gekennzeichnet, dass** das Verfahren des Weiteren umfasst:

wiederholtes Messen der mehreren Schweißparameter, die in dem nicht-adaptiven Zustand auftreten, mit der Abfragerate über mehrere Zeitintervalle; und
wiederholtes Berechnen der mehreren Qualitätsparameter für jeweilige Messungen, die für die mehreren Zeitintervalle erfasst wurden.

**3.** Verfahren nach Anspruch 1 oder 2, **dadurch gekennzeichnet, dass** das Verfahrendes Weiteren - für einen Qualitätsparameter der mehreren Qualitätsparameter - umfasst:

Vergleichen eines Wertes jedes der berechneten Qualitätsparameter für das Zeitintervall mit einem entsprechenden erwarteten Qualitätsparameterwert, um zu bestimmen, ob eine Differenz zwischen dem Wert des berechneten Qualitätsparameters und dem erwarteten Qualitätsparameterwert eine zuvor festgelegte Schwelle überschreitet; und
wenn die Differenz die zuvor festgelegte Schwelle überschreitet:

Gewichten des Wertes des berechneten Qualitätsparameters mit einem Größenordnungsgewicht auf Grundlage der Differenz, und
Gewichten des Wertes des berechneten Qualitätsparameters mit einem Zeitbeitragsgewicht auf der Grundlage eines Zeitbeitrags des Zeitintervalls zu der Wellenform, die das Zeitintervall enthält.

**4.** Verfahren nach einem der Ansprüche 1 bis 3, **dadurch gekennzeichnet, dass** das Verfahren des Weiteren umfasst:

Berechnen eines Qualitätsindikators für das Zeitintervall auf der Grundlage gewichteter Werte der Qualitätsparameter, und/oder
Aggregieren mehrerer Qualitätsindikatoren, die jeweils mit mehreren Zeitintervallen verknüpft sind; und/oder
Berechnen eines Gesamtqualitätsindikators für den Schweißprozess auf der Grundlage der mehreren aggregierten Qualitätsindikatoren.

**5.** Verfahren nach einem der Ansprüche 1 bis 4, **dadurch gekennzeichnet, dass** das Verfahren des Weiteren umfasst: Verwenden der mehreren berechneten Qualitätsparameter für den nicht-adaptiven Zustand als Trainingsdaten zum Beurteilen anschließender Schweißprozesse, und/oder wiederholtes Überwachen von Werten für die Befehlssignale während des nicht-adaptiven Zustands mit der Abfragerate über mehrere Zeitintervalle, und/oder Berechnen von Rauschparametern mindestens teilweise auf der Grundlage von Differenzen zwischen den Werten der überwachten Befehlssignale und den während der mehreren Zeitintervalle erfassten Messungen der mehreren Schweißparameter.

**6.** Verfahren nach einem der Ansprüche 1 bis 5, **dadurch gekennzeichnet, dass** das Verfahren des Weiteren umfasst:

Messen der mehreren Schweißparameter, die zwischen dem vorrückenden Draht (20) und dem Werkstück (30) generiert werden, während eines oder mehrerer nicht-adaptiver Zustände aus der Reihe zeitsegmentierter Zustände; und

Justieren der mehreren Schweißparameter, die in dem einen oder den mehreren adaptiven Zuständen gemessen werden, auf der Grundlage der berechneten Rauschparameter auf der Grundlage des nicht-adaptiven Zustands.

**7.** Verfahren nach einem der Ansprüche 1 bis 6, **dadurch gekennzeichnet, dass** das Verfahren des Weiteren umfasst: Berechnen der mehreren Qualitätsparameter für den einen oder die mehreren adaptiven Zustände auf der Grundlage justierter Messungen der mehreren Schweißparameter, die während des einen oder der mehreren adaptiven Zustände erfasst wurden, und/oder Berechnen eines Adaptionsmodells auf der Grundlage der Rauschparameter, wobei das Adaptionsmodell Änderungen an Befehlssignalen durch einen adaptiven Controller des Schweißgerätes (10) darstellt, um Schweißbedingungen zu berücksichtigen.

**8.** Verfahren nach einem der Ansprüche 1 bis 7, **dadurch gekennzeichnet, dass** das Verfahren des Weiteren umfasst:

Messen der mehreren Schweißparameter, die zwischen dem vorrückenden Draht (20) und dem Werkstück (30) generiert werden, während eines oder mehrerer nicht-adaptiver Zustände aus der Reihe zeitsegmentierter Zustände; und

Justieren der mehreren Schweißparameter, die in dem einen oder den mehreren adaptiven Zuständen gemessen werden, auf der Grundlage des Adaptionsmodells.

**9.** System zum Bestimmen einer Qualität einer Schweißung durch Überwachen eines Schweißgerätes (10), während das Schweißgerät (10) einen Schweißprozess ausführt, durch Erzeugen von Ist-Schweißparametern zwischen einem vorrückenden Draht (20) und einem Werkstück (30), wobei der Schweißprozess durch eine Reihe sich schnell wiederholender Wellenformen definiert wird, die durch Befehlssignale an eine Stromversorgung (12) des Schweißgerätes (10) gesteuert werden, wobei das System umfasst:
einen Logikzustands-Controller zum Segmentieren einer Wellenform, die einen Schweißzyklus mit einer Zykluszeit aufweist, zu einer Reihe zeitsegmentierter Zustände, **dadurch gekennzeichnet, dass** das System des Weiteren umfasst:

eine Auswahlschaltung zum Auswählen eines nicht-adaptiven Zustands aus der Reihe zeitsegmentierter Zustände, wobei der nicht-adaptive Zustand ein Segment der Wellenform darstellt, in dem die Befehlssignale unter verschiedenen Schweißbedingungen unveränderlich bleiben;

eine Überwachungsschaltung, die dafür konfiguriert ist, mehrere Schweißparameter, die zwischen dem vorrückenden Draht und dem Werkstück (30) generiert werden, während des nicht-adaptiven Zustands mit einer Abfragerate über ein Zeitintervall zu messen; und

eine Schaltung zum Berechnen mehrerer Qualitätsparameter für den nicht-adaptiven Zustand auf der Grundlage von Messungen der mehreren Schweißparameter, die während des Zeitintervalls innerhalb des nicht-adaptiven Zustands erfasst wurden.

**10.** System nach Anspruch 9, **dadurch gekennzeichnet, dass** die Überwachungsschaltung des Weiteren dafür konfiguriert ist, die mehreren Schweißparameter, die in dem nicht-adaptiven Zustand auftreten, wiederholt mit der Abfragerate über mehrere Zeitintervalle zu messen; und dadurch, dass

die Schaltung zum Berechnen der mehreren Qualitätsparameter des Weiteren dafür konfiguriert ist, die mehreren Qualitätsparameter für jeweilige Messungen, die für die mehreren Zeitintervallen erfasst wurden, wiederholt zu berechnen.

**11.** System nach Anspruch 9 oder 10, **dadurch gekennzeichnet, dass** das System - für einen Qualitätsparameter der mehreren Qualitätsparameter - des Weiteren umfasst:

> eine Schaltung zum Vergleichen eines Wertes jedes der berechneten Qualitätsparameter für das Zeitintervall mit einem entsprechenden erwarteten Qualitätsparameterwert, um zu bestimmen, ob eine Differenz zwischen dem Wert des berechneten Qualitätsparameters und dem erwarteten Qualitätsparameterwert eine zuvor festgelegte Schwelle überschreitet; und
> eine Schaltung zum Gewichten des Wertes des berechneten Qualitätsparameters mit einem Größenordnungsgewicht auf Grundlage der Differenz; und
> eine Schaltung zum Gewichten des Wertes des berechneten Qualitätsparameters mit einem Zeitbeitragsgewicht auf der Grundlage eines Zeitbeitrags des Zeitintervalls zu der Wellenform, die das Zeitintervall enthält.

**12.** System nach einem der Ansprüche 9 bis 11, **dadurch gekennzeichnet, dass** das System des Weiteren eine Schätzschaltung zum wiederholten Überwachen von Werten der Befehlssignale während des nicht-adaptiven Zustands mit der Abfragerate über mehrere Zeitintervalle sowie zum Berechnen von Rauschparametern mindestens teilweise auf der Grundlage von Differenzen zwischen den Werten der überwachten Befehlssignale und den während der mehreren Zeitintervalle erfassten Messungen der mehreren Schweißparameter umfasst.

**13.** System nach einem der Ansprüche 9 bis 12, **dadurch gekennzeichnet, dass** die Überwachungsschaltung des Weiteren dafür konfiguriert ist, die mehreren Schweißparameter, die zwischen dem vorrückenden Draht (20) und dem Werkstück (30) generiert werden, während eines oder mehrerer adaptiver Zustände aus der Reihe zeitsegmentierter Zustände zu messen, und dadurch, dass das System des Weiteren umfasst:
eine Filterschaltung zum Justieren der mehreren Schweißparameter, die in dem einen oder den mehreren adaptiven Zuständen gemessen werden, auf der Grundlage der berechneten Rauschparameter auf der Grundlage des nicht-adaptiven Zustands.

**14.** System nach einem der Ansprüche 9 bis 13, **dadurch gekennzeichnet, dass** die Schaltung zum Berechnen der mehreren Qualitätsparameter des Weiteren dafür konfiguriert ist, die mehreren Qualitätsparameter für den einen oder die mehreren adaptiven Zustände auf der Grundlage justierter Messungen der mehreren Schweißparameter zu berechnen, die während des einen oder der mehreren adaptiven Zustände erfasst wurden.

**15.** System nach einem der Ansprüche 9 bis 14, **dadurch gekennzeichnet, dass** das System des Weiteren eine Schaltung zum Berechnen eines Adaptionsmodells auf der Grundlage der Rauschparameter umfasst, wobei das Adaptionsmodell Änderungen an Befehlssignalen durch einen adaptiven Controller des Schweißgerätes (10) darstellt, um Schweißbedingungen zu berücksichtigen.

**16.** System nach einem der Ansprüche 9 bis 15, **dadurch gekennzeichnet, dass** die Überwachungsschaltung des Weiteren dafür konfiguriert ist, die mehreren Schweißparameter, die zwischen dem vorrückenden Draht (20) und dem Werkstück (30) generiert werden, während eines oder mehrerer adaptiver Zustände aus der Reihe zeitsegmentierter Zustände zu messen und die mehreren Schweißparameter, die in dem einen oder den mehreren adaptiven Zuständen gemessen werden, auf der Grundlage des Adaptionsmodells zu justieren.

## Revendications

**1.** Procédé de détermination d'une qualité d'une soudure par la surveillance d'un soudeur (10) pendant que le soudeur (10) réalise un processus de soudage par la création de paramètres de soudage réels entre un fil avançant (20) et une pièce d'ouvrage (30), le processus de soudage étant défini par une série de formes d'onde à répétition rapide commandées par des signaux de commande à une alimentation électrique (12) du soudeur (10), ledit procédé comprenant :

> la segmentation d'une forme d'onde, ayant un cycle de soudage avec un temps de cycle, en une série d'états segmentés dans le temps, **caractérisé en ce que** le procédé comprend en outre
> la sélection d'un état non adaptatif parmi la série d'états segmentés dans le temps, dans lequel l'état non adaptatif représente un segment de la forme d'onde où les signaux de commande restent invariables dans des conditions de soudage différentes ;
> la mesure d'une pluralité de paramètres de soudage générés entre le fil avançant (20) et la pièce d'ouvrage (30) dans l'état non adaptatif à un taux d'interrogation au cours d'un intervalle de temps ; et

le calcul d'une pluralité de paramètres de qualité pour l'état non adaptatif sur la base de mesures de la pluralité de paramètres de soudage acquis au cours de l'intervalle de temps dans l'état non adaptatif.

2. Procédé selon la revendication 1, **caractérisé en ce que** le procédé comprend en outre :

la mesure de la pluralité de paramètres de soudage survenant dans l'état non adaptatif à répétition au taux d'interrogation au cours d'une pluralité d'intervalles de temps ; et
le calcul à répétition de la pluralité de paramètres de qualité pour des mesures respectives acquises au cours de la pluralité d'intervalles de temps.

3. Procédé selon la revendication 1 ou 2, **caractérisé en ce que** le procédé comprend en outre, pour un paramètre de qualité parmi la pluralité de paramètres de qualité :

la comparaison d'une valeur de chacun du paramètre de qualité calculée au cours de l'intervalle de temps à une valeur de paramètre de qualité prévue correspondante pour déterminer si une différence entre la valeur du paramètre de qualité calculée et la valeur de paramètre de qualité prévue dépasse un seuil prédéterminé ; et
lorsque la différence dépasse le seuil prédéterminé,
la pondération de la valeur du paramètre de qualité calculée avec un poids de grandeur sur la base de la différence, et
la pondération de la valeur du paramètre de qualité calculée avec un poids de contribution de temps sur la base d'une contribution de temps de l'intervalle de temps à la forme d'onde incluant l'intervalle de temps.

4. Procédé selon l'une quelconque des revendications 1 à 3, **caractérisé en ce que** le procédé comprend en outre
le calcul d'un indicateur de qualité au cours de l'intervalle de temps sur la base des valeurs pondérées des paramètres de qualité, et/ou
l'agrégation d'une pluralité d'indicateurs de qualité associés respectivement à une pluralité d'intervalles de temps ; et/ou
le calcul d'un indicateur de qualité global pour le processus de soudage sur la base de la pluralité d'indicateurs de qualité agrégés.

5. Procédé selon l'une quelconque des revendications 1 à 4, **caractérisé en ce que** le procédé comprend en outre l'utilisation de la pluralité de paramètres de qualité calculés pour l'état non adaptatif en tant que données d'apprentissage pour évaluer des processus de soudage suivants, et/ou la surveillance de valeurs pour les signaux de commande dans l'état non adaptatif au taux d'interrogation à répétition au cours d'une pluralité d'intervalles de temps, et/ou le calcul de paramètres de bruit sur la base, au moins en partie, de différences entre les valeurs des signaux de commande surveillés et les mesures de la pluralité de paramètres de soudage acquis au cours de la pluralité d'intervalles de temps.

6. Procédé selon l'une quelconque des revendications 1 à 5, **caractérisé en ce que** le procédé comprend en outre :

la mesure de la pluralité de paramètres de soudage générés entre le fil avançant (20) et la pièce d'ouvrage (30) dans un ou plusieurs états adaptatifs parmi la série d'états segmentés dans le temps ; et
l'ajustement de la pluralité de paramètres de soudage mesurés dans les un ou plusieurs états adaptatifs sur la base des paramètres de bruit calculés sur la base de l'état non adaptatif.

7. Procédé selon l'une quelconque des revendications 1 à 6, **caractérisé en ce que** le procédé comprend en outre :
le calcul de la pluralité de paramètres de qualité pour les un ou plusieurs états adaptatifs sur la base de mesures ajustées de la pluralité de paramètres de soudage acquis dans les un ou plusieurs états adaptatifs, et/ou le calcul d'un modèle d'adaptation sur la base des paramètres de bruit, dans lequel le modèle d'adaptation représente des changements de signaux de commande par un organe de commande adaptatif du soudeur (10) pour tenir compte des conditions de soudage.

8. Procédé selon l'une quelconque des revendications 1 à 7, **caractérisé en ce que** le procédé comprend en outre :

la mesure de la pluralité de paramètres de soudage générés entre le fil avançant (20) et la pièce d'ouvrage (30) dans un ou plusieurs états adaptatifs parmi la série d'états segmentés dans le temps ; et
l'ajustement de la pluralité de paramètres de soudage mesurés dans les un ou plusieurs états adaptatifs sur la base du modèle d'adaptation.

**9.** Système de détermination d'une qualité d'une soudure par la surveillance d'un soudeur (10) pendant que le soudeur (10) réalise un processus de soudage par la création de paramètres de soudage réels entre un fil avançant (20) et une pièce d'ouvrage (30), le processus de soudage étant défini par une série de formes d'onde à répétition rapide commandées par des signaux de commande à une alimentation électrique (12) du soudeur (10), le système comprenant :

un organe de commande d'état logique pour la segmentation d'une forme d'onde, ayant un cycle de soudage avec un temps de cycle, en une série d'états segmentés dans le temps ; **caractérisé en ce que** le système comprend en outre
un circuit de sélection pour la sélection d'un état non adaptatif parmi la série d'états segmentés dans le temps, dans lequel l'état non adaptatif représente un segment de la forme d'onde où les signaux de commande restent invariables dans des conditions de soudage différentes ;
un circuit de surveillance configuré pour la mesure d'une pluralité de paramètres de soudage générés entre le fil avançant et la pièce d'ouvrage (30) dans l'état non adaptatif à un taux d'interrogation au cours d'un intervalle de temps ; et
un circuit pour le calcul d'une pluralité de paramètres de qualité pour l'état non adaptatif sur la base de mesures de la pluralité de paramètres de soudage acquis au cours de l'intervalle de temps dans l'état non adaptatif.

**10.** Système selon la revendication 9, **caractérisé en ce que** le circuit de surveillance est en outre configuré pour la mesure de la pluralité de paramètres de soudage survenant dans l'état non adaptatif à répétition au taux d'interrogation au cours d'une pluralité d'intervalles de temps ; et **en ce que**
le circuit pour le calcul de la pluralité de paramètres de qualité est en outre configuré pour le calcul à répétition de la pluralité de paramètres de qualité pour des mesures respectives acquises au cours de la pluralité d'intervalles de temps.

**11.** Système selon la revendication 9 ou 10, **caractérisé en ce que**, pour un paramètre de qualité parmi la pluralité de paramètres de qualité, le système comprend en outre :

un circuit pour la comparaison d'une valeur de chacun du paramètre de qualité calculée au cours de l'intervalle de temps à une valeur de paramètre de qualité prévue correspondante pour déterminer si une différence entre la valeur du paramètre de qualité calculée et la valeur de paramètre de qualité prévue dépasse un seuil prédéterminé ;
un circuit pour la pondération de la valeur du paramètre de qualité calculée avec un poids de grandeur sur la base de la différence ; et
un circuit pour la pondération de la valeur du paramètre de qualité calculée avec un poids de contribution de temps sur la base d'une contribution de temps de l'intervalle de temps à la forme d'onde incluant l'intervalle de temps.

**12.** Système selon l'une quelconque des revendications 9 à 11, **caractérisé en ce que** le système comprend en outre un circuit d'estimation pour la surveillance de valeurs des signaux de commande dans l'état non adaptatif au taux d'interrogation à répétition au cours d'une pluralité d'intervalles de temps, et pour le calcul de paramètres de bruit sur la base, au moins en partie, de différences entre les valeurs des signaux de commande surveillés et les mesures de la pluralité de paramètres de soudage acquis au cours de la pluralité d'intervalles de temps.

**13.** Système selon l'une quelconque des revendications 9 à 12, **caractérisé en ce que** le circuit de surveillance est en outre configuré pour la mesure de la pluralité de paramètres de soudage générés entre le fil avançant (20) et la pièce d'ouvrage (30) dans un ou plusieurs états adaptatifs parmi la série d'états segmentés dans le temps, et **en ce que** le système comprend en outre :
un circuit de filtre pour l'ajustement de la pluralité de paramètres de soudage mesurés dans les un ou plusieurs états adaptatifs sur la base des paramètres de bruit calculés sur la base de l'état non adaptatif.

**14.** Système selon l'une quelconque des revendications 9 à 13, **caractérisé en ce que** le circuit pour le calcul de la pluralité de paramètres de qualité est en outre configuré pour le calcul de la pluralité de paramètres de qualité pour les un ou plusieurs états adaptatifs sur la base de mesures ajustées de la pluralité de paramètres de soudage acquis dans les un ou plusieurs états adaptatifs.

**15.** Système selon l'une quelconque des revendications 9 à 14, **caractérisé en ce que** le système comprend en outre un circuit pour le calcul d'un modèle d'adaptation sur la base des paramètres de bruit, dans lequel le modèle d'adaptation représente des changements de signaux de commande par un organe de commande adaptatif du soudeur (10) pour tenir compte des conditions de soudage.

16. Système selon l'une quelconque des revendications 9 à 15, **caractérisé en ce que** le circuit de surveillance est en outre configuré pour la mesure de la pluralité de paramètres de soudage générés entre le fil avançant (20) et la pièce d'ouvrage (30) dans un ou plusieurs états adaptatifs parmi la série d'états segmentés dans le temps, et l'ajustement de la pluralité de paramètres de soudage mesurés dans les un ou plusieurs états adaptatifs sur la base du modèle d'adaptation.

FIG. 1

FIG. 2

FIG. 3

FIG. 4

FIG. 5

FIG. 6

FIG. 7

FIG. 8

900

DIVIDE WAVE SHAPES OF
WELD CYCLE INTO STATES — 902

SAMPLE WELD PARAMETERS FOR
STATES AT GIVEN RATE — 904

PERIODICALLY PROCESS
SAMPLED WELD PARAMETERS — 906

908

TRAINING WELD
OR
NORMAL WELD?

TRAINING WELD

NORMAL WELD

910

CALCULATE WELD QUALITY
PARAMETERS FOR STATES

912

SAVE WELD
QUALITY PARAMETERS

914

DETERMINE DATA OUTLIERS OF
WELD PARAMETERS FOR STATES

916

WEIGHT DATA OUTLIERS BASED ON
MAGNITUDE OF DEVIATION

918

WEIGHT DATA OUTLIERS BASED ON
TIME CONTRIBUTION

922

CALCULATE OVERALL
WELD QUALITY INDICATOR

920

SUM DATA OUTLIERS FROM ALL WELD
PARAMETER CATEGORIES

FIG. 9

FIG. 10

1100

PERFORM MANUAL
WELDING PROCESS ~1102

PERIODICALLY CALCULATE
WELD SCORE ~1104

COMPARE WELD SCORE TO
THRESHOLD WELD SCORE ~1106

GOOD WELD
OR
BAD WELD? 1108

GOOD WELD

BAD WELD

INFORM OPERATOR OF
GOOD WELD CONDITION 1110

LOG
GOOD WELD CONDITION 1112

INFORM OPERATOR OF
BAD WELD CONDITION 1114

SUGGEST CORRECTIVE
ACTION 1116

LOG
BAD WELD CONDITION 1118

FIG. 11

FIG. 12

1300

STUDENTS PERFORM MANUAL
WELDING PROCESS                    1302

PERIODICALLY CALCULATE WELD
SCORE FOR EACH STUDENT            1304

MONITOR ACTUAL TIME SPENT
WELDING BY EACH STUDENT           1306

ASSOCIATE WELD SCORE AND
WELDING TIME FOR EACH STUDENT     1308

OUTPUT WELD SCORE AND WELDING
TIME FOR EACH STUDENT             1310

FIG. 13

1400

| WELD CONDITION | FIXED? | $ COST | TIME COST | WELD SCORE |
|---|---|---|---|---|
| WIRE COMPOSITION | YES | N/A | N/A | |
| WORKPIECE COMPOSITION | YES | N/A | N/A | |
| SHIELDING GAS FLOW RATE | NO | a | b | c |
| SHIELDING GAS COMPOSITION | YES | N/A | N/A | |
| WORKPIECE PRE-HEAT TEMPERATURE | YES | N/A | N/A | |
| | | | | |
| | | | | |

FIG. 14A

1400

| | WELD CONDITION | FIXED? | $ COST | TIME COST | WELD SCORE |
|---|---|---|---|---|---|
| 1404 | WIRE COMPOSITION | YES | N/A | N/A | |
| 1406 | WORKPIECE COMPOSITION | YES | N/A | N/A | |
| 1408 | SHIELDING GAS FLOW RATE | NO | $d$ | $e$ | $f$ |
| 1410 | SHIELDING GAS COMPOSITION | YES | N/A | N/A | |
| 1412 | WORKPIECE PRE-HEAT TEMPERATURE | YES | N/A | N/A | |
| | | | | | |
| | | | | | |

FIG. 14B

1500

| | PS# | CONDITIONS | | WELDER | PROCESS | $ | TIME | SCORE |
|---|---|---|---|---|---|---|---|---|
| 1516 | 01 | WIRE COMPOSITION | a | M | O | t | v | x |
| | | WORKPIECE COMPOSITION | b | | | | | |
| | | SHIELDING GAS FLOW RATE | c | | | | | |
| | | SHIELDING GAS COMPOSITION | d | | | | | |
| | | WORKPIECE PRE-HEAT TEMPERATURE | e | | | | | |
| 1518 | 02 | WIRE COMPOSITION | f | N | P | u | w | y |
| | | WORKPIECE COMPOSITION | b | | | | | |

1502 1504 1506 1508 1510 1512 1514

•

•

•

FIG. 15

# FIG. 16

1600

1610

1620

```
monitored              Upgraded          calculated          Diagnostic          diagnostic
weld                   Monitor           quality parameters  Logic               results
parameters             (M')                                  Circuit
(from sensors                                                (DLC)
and monitoring
devices)
```

# FIG. 17

1700

start

1710 — generate a series of rapidly repeating wave shapes, each wave shape constituting a weld cycle with a cycle time

1720 — divide the wave shapes into states

1730 — measure a plurality of weld parameters occurring in one or more of the states at an interrogation rate over a period of time repeatedly during the welding process

1740 — calculate a plurality of quality parameters for each of the states based on the measurements of the weld parameters during the welding process,

1750 — analyze at least one of the plurality of quality parameters and the plurality of weld parameters to diagnose the arc welding process by determining one or more possible causes of one or more localized or continuous defects of the weld

end

EP 3 218 133 B1

FIG. 18

FIG. 19

**2000**

Acquire welding parameters during a non-adaptive segment of a waveform

**2002**

Identify noise in welding parameters due to welding conditions

**2004**

Determine adjustments to monitored welding parameters to account for the noise identified

**2006**

Determine weld quality based on adjusted welding parameters

# FIG. 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011058433 A
- US 6051805 A, Vaidya
- US 6441342 B, Hsu
- US 5278390 A